# EUROPEAN PATENT APPLICATION

(11) **EP 4 712 059 A1**
(43) Date of publication of application: **18.03.2026**
(21) Application number: 24806899.1
(22) Date of filing: 09.04.2024
(51) Int. Cl.: G08G 3/00, G01C 21/22

(54) **NAVIGATION ASSISTANCE DEVICE, NAVIGATION ASSISTANCE METHOD, AND PROGRAM**

(30) Priority: 12.05.2023 JP 2023079448
(71) Applicant: FURUNO ELECTRIC CO., LTD., Nishinomiya-City, Hyogo 662-8580 (JP)
(72) Inventor: NAKAGAWA, Kazuya, Nishinomiya-City, Hyogo 6628580 (JP); YOSHINAGA, Makoto, Nishinomiya-City, Hyogo 6628580 (JP); KAMATA, Shogo, Nishinomiya-City, Hyogo 6628580 (JP)
(74) Representative: Müller Hoffmann & Partner
(86) International application number: PCT/JP2024/014454
(87) International publication number: WO 2024/236945

(57) **Abstract**

[PROBLEM] To provide a navigation assistance device that can present a candidate sea-route to a user in an easy-to-understand manner. [SOLUTION] This navigation assistance device comprises: a candidate sea-route calculation unit that calculates a plurality of candidate sea-routes for a ship; a sea-route classification unit that classifies the plurality of candidate sea-routes into a plurality of groups on the basis of the similarity therebetween, and determines a representative sea-route for each of the plurality of groups; and a display unit that displays the representative sea-route of each of the plurality of groups.

## Description

### Technical Field

The disclosure relates to a navigation assistance device, a navigation assistance method, and a program.

### Conventional Art

Patent Literature 1 discloses a give-way course search device that performs course search in the case where there is a predicted give-way region on a straight line connecting a destination and an own ship.

### Citation List

### Patent Literature

Patent Literature 1: Japanese Patent Application Laid-Open No. 2021-160550

### SUMMARY

### Technical Problem

The route generating function includes a function of generating scheduled routes to the destination and a function of generating give-way courses avoiding collision with other ships. When generating the routes, an interactive method may be used to prompt several candidate routes to a user and receive selection of the candidate route.

However, since many candidate routes are generated by the route generating function, if the candidate routes are all prompted to the user, it may be difficult to understand. Particularly, in the case of avoiding collision with other ships in congested waters, since a very large number of candidate routes are calculated, such an issue becomes prominent.

In view of the above problems, the purpose of the disclosure mainly relates to providing a navigation assistance device, a navigation assistance method, and a program capable of prompting candidate routes to a user in an easily understandable manner.

### Solution to Problem

To solve the above problems, a navigation assistance device of an aspect of the disclosure includes: a candidate route calculating unit configured to calculate a plurality of candidate routes for a ship; a route classifying unit configured to classify the plurality of candidate routes into a plurality of groups based on similarity and determine a representative route for each of the plurality of groups; and a display unit configured to display the representative route of each of the plurality of groups. Accordingly, it becomes possible to prompt candidate routes to a user in an easily understandable manner.

In the above aspect, a detecting unit configured to detect an obstacle may be further included. The candidate route calculating unit may be configured to calculate a plurality of give-way courses for avoiding collision with the obstacle as the plurality of candidate routes. Accordingly, it becomes possible to prompt give-way courses to the user in an easily understandable manner.

In the above aspect, the detecting unit may be configured to detect the obstacle based on data generated by a radar, an AIS, or a camera. Accordingly, it becomes possible to detect an obstacle.

In the above aspect, the route classifying unit may be configured to classify the plurality of candidate routes into the plurality of groups by clustering. Accordingly, grouping by clustering becomes possible.

In the above aspect, the route classifying unit may be configured to classify the plurality of candidate routes into the plurality of groups based on positions of point groups constituting each of the plurality of candidate routes. Accordingly, grouping corresponding to positions of point groups constituting the candidate route becomes possible.

In the above aspect, the route classifying unit may be configured to classify the plurality of candidate routes into the plurality of groups based on a course change angle of each of the plurality of candidate routes. Accordingly, grouping corresponding to a course change angle of the candidate route becomes possible.

In the above aspect, the route classifying unit may be configured to determine the representative route based on a length of the candidate route. Accordingly, it becomes possible to determine the representative route based on a length.

In the above aspect, the route classifying unit may be configured to determine the representative route based on the number of course change points of the candidate route. Accordingly, it becomes possible to determine the representative route based on the number of course change points.

In the above aspect, an indicator calculating unit configured to calculate a risk indicator representing a risk of colliding with the obstacle may be further included. The route classifying unit may be configured to determine the representative route based on the risk indicator in a case of navigating the candidate route. Accordingly, it becomes possible to determine the representative route based on a risk indicator.

In the above aspect, an information calculating unit configured to calculate route information of the representative route may be further included. The display unit may be configured to display the route information together with the representative route. Accordingly, it becomes possible to display route information together with the representative route.

In the above aspect, the display unit may be configured to discriminatingly display a symbol of the obstacle that approaches in a case where the representative route is navigated based on the risk indicator. Accordingly, it becomes possible to discriminatingly display a symbol of the obstacle.

In the above aspect, a receiving unit configured to receive adjustment of the similarity for classifying the plurality of candidate routes into the plurality of groups may be further included. Accordingly, adjustment of the similarity becomes possible.

In addition, a navigation assistance method of another aspect of the disclosure includes: calculating a plurality of candidate routes for a ship; grouping the plurality of candidate routes into a plurality of groups based on similarity; selecting a representative route for each of the plurality of groups; and displaying the representative route of each of the plurality of groups. Accordingly, it becomes possible to prompt candidate routes to a user in an easily understandable manner.

In addition, a program of another aspect of the disclosure causes a computer to execute processing configured to: calculate a plurality of candidate routes for a ship; group the plurality of candidate routes into a plurality of groups based on similarity; determine a representative route for each of the plurality of groups; and display the representative route of each of the plurality of groups. Accordingly, it becomes possible to prompt candidate routes to a user in an easily understandable manner.

### BRIEF DESCRIPTION OF THE DRAWINGS

FIG. 1 is a view showing an example of an onboard system.
FIG. 2 is a view showing an example of a navigation assistance device according to a first embodiment.
FIG. 3 is a view showing an example of an other ship management database.
FIG. 4 is a view for describing a bumper region.
FIG. 5 is a view for describing the bumper region.
FIG. 6 is a view for describing calculation of an intrusion degree.
FIG. 7 is a view for describing calculation of the intrusion degree.
FIG. 8 is a view for describing calculation of the intrusion degree.
FIG. 9 is a view for describing calculation of the intrusion degree.
FIG. 10 is a view showing a display example of scheduled routes.
FIG. 11 is a view showing an example of a navigation assistance method according to the first embodiment.
FIG. 12 is a view showing an example of the navigation assistance device according to a second embodiment.
FIG. 13 is a view showing an example of identifying risk intervals.
FIG. 14 is a view showing an example of identifying blockage ranges.
FIG. 15 is a view showing an example of identifying the blockage ranges.
FIG. 16 is a view showing an example of identifying the blockage ranges.
FIG. 17 is a view showing an example of the navigation assistance method according to the second embodiment.
FIG. 18 is a view showing an example of the navigation assistance device according to a third embodiment.
FIG. 19 is a view for describing avoidance at a short distance.
FIG. 20 is a view for describing avoidance at a middle distance.
FIG. 21 is a view for describing a collision indicator weight.
FIG. 22 is a view for describing an avoidance indicator weight.
FIG. 23 is a view for describing a threshold.
FIG. 24 is a view for describing calculation of a give-way course.
FIG. 25 is a view for describing calculation of the give-way course.
FIG. 26 is a view for describing a route output weight.
FIG. 27 is a view showing an example of the navigation assistance method according to the third embodiment.
FIG. 28 is a view showing an example of the navigation assistance device according to a fourth embodiment.
FIG. 29 is a view for describing route evaluation.
FIG. 30 is a view for describing an encountering relationship.
FIG. 31 is a view for describing the encountering relationship.
FIG. 32 is a view for describing the encountering relationship.
FIG. 33 is a view for describing stand-on and give-way determination.
FIG. 34 is a view for describing stand-on and give-way determination.
FIG. 35 is a view for describing stand-on and give-way determination.
FIG. 36 is a view for describing stand-on and give-way determination.
FIG. 37 is a view for describing route evaluation.
FIG. 38 is a view for describing route evaluation.
FIG. 39 is a view for describing route evaluation.
FIG. 40 is a view for describing route evaluation.
FIG. 41 is a view showing an example of the navigation assistance method according to the fourth embodiment.
FIG. 42 is a view continuing FIG. 41.
FIG. 43 is a view showing an example of the navigation assistance device according to a fifth embodiment.
FIG. 44 is a view showing an example of the navigation assistance method according to the fifth embodiment.
FIG. 45 is a view showing an example of the navigation assistance device according to a sixth embodiment.
FIG. 46 is a view for describing generation of candidate routes.
FIG. 47 is a view for describing grouping of the candidate routes.
FIG. 48 is a view for describing grouping of the candidate routes.
FIG. 49 is a view for describing grouping of the candidate routes.
FIG. 50 is a view for describing determination of a representative route.
FIG. 51 is a view for describing display of the representative route.
FIG. 52 is a view for describing display of the representative route.
FIG. 53 is a view for describing display of the representative route.
FIG. 54 is a view for describing display of the representative route.
FIG. 55 is a view showing an example of the navigation assistance method according to the sixth embodiment.
FIG. 56 is a view showing an example of the navigation assistance device according to a comprehensive embodiment.

### DESCRIPTION OF THE EMBODIMENTS

Hereinafter, embodiments of the disclosure will be described with reference to the drawings. In this specification and each drawing, elements similar to those described with respect to previously shown drawings will be labeled with the same reference signs, and detailed descriptions thereof may be appropriately omitted.

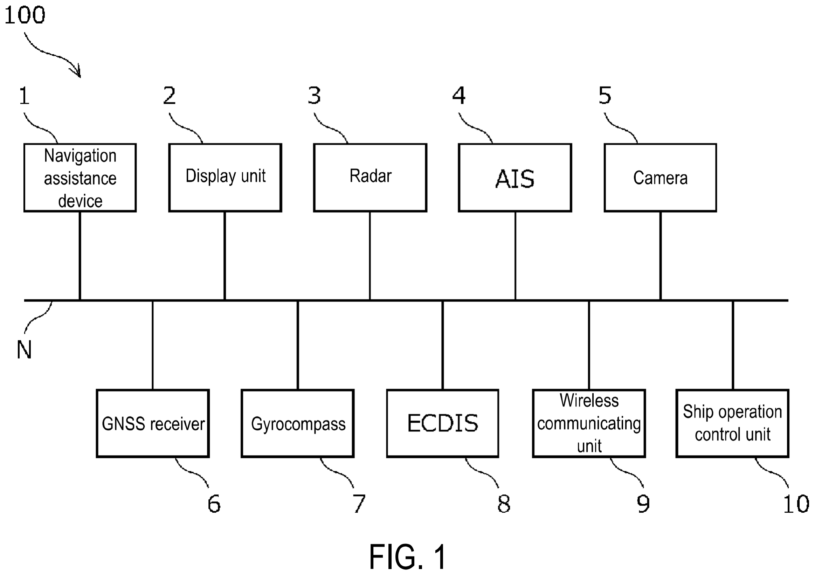

FIG. 1 is a block diagram showing a configuration example of an onboard system 100. The onboard system 100 is a system mounted on a ship. In the following description, a ship on which the onboard system 100 is mounted will be referred to as an "own ship", and other ships will be referred to as "other ships".

The onboard system 100 includes a navigation assistance device 1, a display unit 2, a radar 3, an AIS 4, a camera 5, a GNSS receiver 6, a gyrocompass 7, an ECDIS 8, a wireless communicating unit 9, and a ship operation control unit 10. These devices are connected to a network N such as a LAN, and are capable of performing network communication with each other.

The navigation assistance device 1 includes a computer that includes a CPU, a RAM, a ROM, a non-volatile memory, and an input and output interface. The CPU of the navigation assistance device 1 executes information processing according to programs loaded from the ROM or the non-volatile memory into the RAM.

The programs may be supplied via an information storage medium such as an optical disc or a memory card, or may be supplied via a communication network such as the Internet or the LAN.

The display unit 2 displays display images generated by the navigation assistance device 1. The display unit 2 also displays radar images, camera images, or electronic charts.

The display unit 2 is, for example, a display device with a touch sensor, i.e., a so-called touch panel. The touch sensor detects indication positions within a screen indicated by a user's finger or the like. Not limited thereto, the indication positions may also be inputted by a pointing device such as a trackball.

The radar 3 transmits radio waves around the own ship and receives reflected waves thereof, and generates echo data based on the received signals. In addition, the radar 3 identifies a target from the echo data and generates TT (target tracking) data representing the position and the speed of the target.

The AIS (Automatic Identification System) 4 receives AIS data from other ships present around the own ship or from onshore control stations. Not limited to the AIS, a VDES (VHF Data Exchange System) may also be used. The AIS data includes identification codes, ship names, positions, ship courses, ship speeds, ship types, hull lengths, and destinations of other ships.

The camera 5 is a digital camera that captures images of outside from the own ship and generates image data. The camera 5 is installed, for example, on the bridge of the own ship and oriented toward the heading. The camera 5 is, for example, a so-called PTZ camera with a pan-tilt function and an optical zoom function.

The camera 5 may include an image recognizing unit that estimates an in-image position and a type of a target such as a ship included in the captured image according to an object detection model. Not limited to the camera 5, the image recognizing unit may also be realized in other devices such as the navigation assistance device 1.

The GNSS receiver 6 detects the position of the own ship based on radio waves received from the GNSS (Global Navigation Satellite System). The gyrocompass 7 detects the heading of the own ship. Not limited to the gyrocompass, a GPS compass may also be used.

The ECDIS (Electronic Chart Display and Information System) 8 acquires the position of the own ship from the GNSS receiver 6 and displays the position of the own ship on an electronic chart. In addition, the ECDIS 8 also displays a planned route of the own ship on the electronic chart. Not limited to the ECDIS, a GNSS plotter may also be used.

The wireless communicating unit 9 includes wireless equipment that realizes satellite communication. In addition, the wireless communicating unit 9 includes wireless equipment that realizes wireless communication using, for example, ultra high frequency, very high frequency, high frequency, medium-high frequency, or medium frequency.

The ship operation control unit 10 is a control device for realizing autonomous navigation and controls the steering gear of the own ship. In addition, the ship operation control unit 10 may also control the engine of the own ship.

In this embodiment, the navigation assistance device 1 and the display unit 2 are devices independent from each other. However, not limited thereto, the navigation assistance device 1 and the display unit 2 may also be an integrated device.

In addition, the navigation assistance device 1 is an independent device, but is not limited thereto and may also be integrated with other devices such as the ECDIS 8. In other words, a part or all of the functions of the navigation assistance device 1 may also be realized in other devices.

In addition, the display unit 2 is also an independent device. However, not limited thereto, a display unit of other devices such as the ECDIS 8 may also be used as the display unit 2 that displays display images generated by the navigation assistance device 1.

In this embodiment, the navigation assistance device 1 is mounted on a ship, but is not limited thereto and may also be, for example, installed in onshore control stations and used for navigation assistance of ships under surveillance.

### [First embodiment]

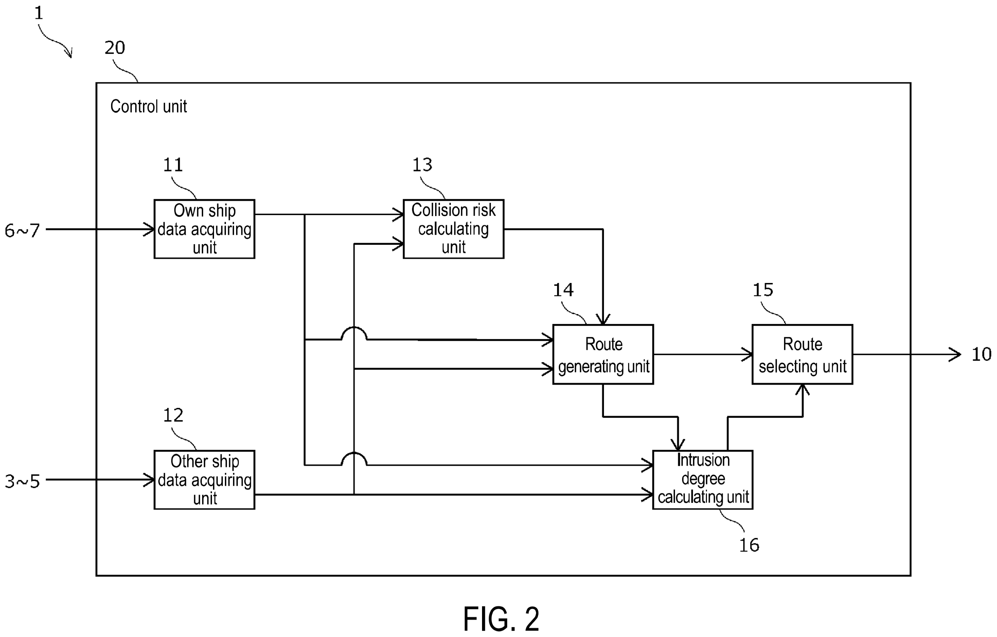

FIG. 2 is a block diagram showing a configuration example of the navigation assistance device 1 according to a first embodiment. The navigation assistance device 1 includes a control unit 20. The control unit 20 is a computer including a CPU, a RAM, a ROM, a non-volatile memory, and an input and output interface.

In the first embodiment, the control unit 20 includes an own ship data acquiring unit 11, an other ship data acquiring unit 12, a collision risk calculating unit 13, a route generating unit 14, a route selecting unit 15, and an intrusion degree calculating unit 16. These functional units are realized by the CPU of the control unit 20 executing information processing according to programs.

The own ship data acquiring unit 11 acquires own ship data including the position and the speed of the own ship. The own ship data acquiring unit 11 is an example of a first acquiring unit, the own ship is an example of a first ship, and the own ship data is an example of first ship data. The speed is a vector quantity represented by the ship speed and the ship course, and the ship speed is a scalar quantity.

Specifically, the own ship data acquiring unit 11 sequentially acquires the position of the own ship detected by the GNSS receiver 6, and calculates the speed of the own ship from over-time changes in the position of the own ship. Not limited thereto, the ship speed of the own ship may also be acquired from a speed log (not shown), and the ship course of the own ship may also be acquired from the gyrocompass 7.

The other ship data acquiring unit 12 acquires other ship data including the position and the speed of an other ship. The other ship data acquiring unit 12 is an example of a second acquiring unit and a detecting unit, the other ship is an example of a second ship, and the other ship data is an example of second ship data. The other ship data is generated based on data detected by the radar 3, the AIS 4, or the camera 5 mounted on the own ship.

Specifically, the other ship data acquiring unit 12 sequentially acquires, as the other ship data, TT data generated by the radar 3, AIS data received by the AIS 4, or identification data identified from images captured by the camera 5. The other ship data acquiring unit 12 registers the acquired other ship data in an other ship management database constructed in a memory.

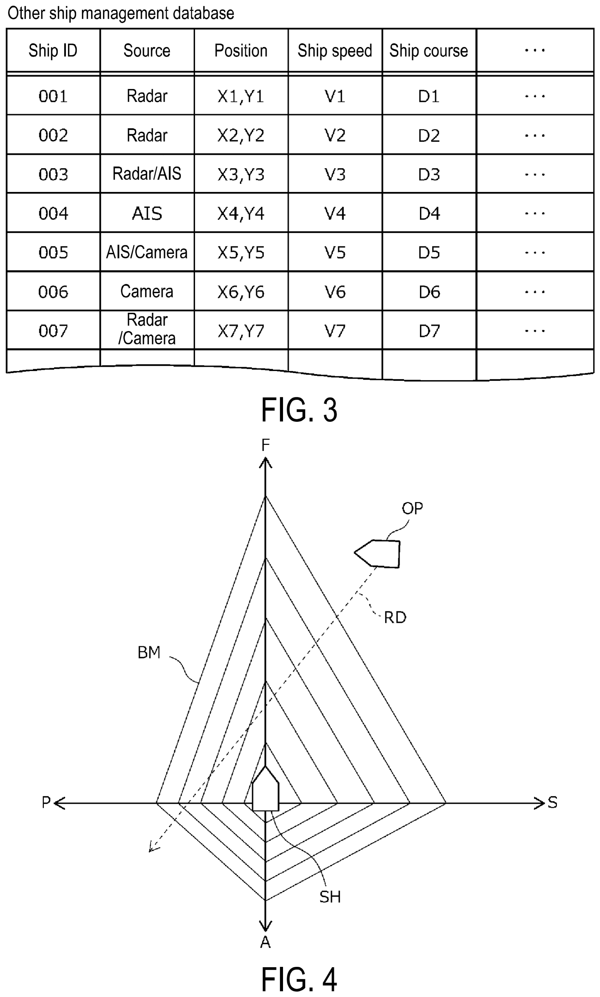

As shown in FIG. 3, the other ship management database includes fields such as "ship ID", "source", "position", "ship speed", and "ship course". The "ship ID" is an identifier assigned to the other ship. The "source" represents by which of the radar 3, the AIS 4, and the camera 5 the other ship data has been generated.

The "position" represents the position of the other ship. The position of the other ship is represented by latitude and longitude. Since the position of the other ship detected by the radar 3 or the camera 5 is represented as a relative position with respect to the own ship, the position is converted to an absolute position using the position of the own ship detected by the GNSS receiver 6.

The "ship speed" represents the ship speed of the other ship. The "ship course" represents the ship course of the other ship. The ship speed and the ship course of the other ship detected by the radar 3 or the camera 5 are estimated from over-time changes in the in-image position of the other ship.

In the case where the position of the other ship data taking one of the AIS 3, the radar 4, and the camera 5 as the source is the same as or approximates the position of the other ship data taking another as the source, these other ship data are combined into one record as relating to a common other ship.

Returning to the description of FIG. 2, the collision risk calculating unit 13 estimates a collision risk between the own ship and the other ship based on the own ship data acquired by the own ship data acquiring unit 11 and the other ship data acquired by the other ship data acquiring unit 12.

For example, the collision risk calculating unit 13 calculates a collision risk region where the risk of collision between the own ship and the other ship is equal to or greater than a particular value. The collision risk region is, for example, an OZT (Obstacle Zone by Target). Not limited thereto, for example, a PAD (Predict Area of Danger) or a DAC (Dangerous Area of Collision) may also be used.

In addition, the collision risk calculating unit 13 may calculate a collision risk value such as a TCPA (Time to Closest Point of Approach) in a CPA collision alarm.

The route generating unit 14 calculates a scheduled route of the own ship. Specifically, the route generating unit 14 calculates multiple scheduled routes serving as candidates for navigation. The route generating unit 14 is an example of a route acquiring unit or a route calculating unit.

For example, in the case where the collision risk estimated by the collision risk calculating unit 13 is equal to or greater than a particular value, the route generating unit 14 calculates a give-way course for avoiding collision as a scheduled route based on the own ship data and the other ship data. The route generating unit 14 calculates the give-way course using a give-way ship operation algorithm.

Not limited thereto, the route generating unit 14 may also acquire a scheduled route from other devices such as the ECDIS 8. The scheduled route in that case is a planned route to the destination based on a navigation plan.

The route selecting unit 15 selects some scheduled routes from among the multiple scheduled routes calculated by the route generating unit 14. In this embodiment, the route selecting unit 15 selects some scheduled routes from among the multiple scheduled routes based on the calculation result of an intrusion degree calculated by the intrusion degree calculating unit 16.

The intrusion degree calculating unit 16 calculates the intrusion degree based on the own ship data acquired by the own ship data acquiring unit 11 and the other ship data acquired by the other ship data acquiring unit 12. The intrusion degree is an indicator representing the degree to which an other ship will intrude into a bumper region set based on the own ship in the future.

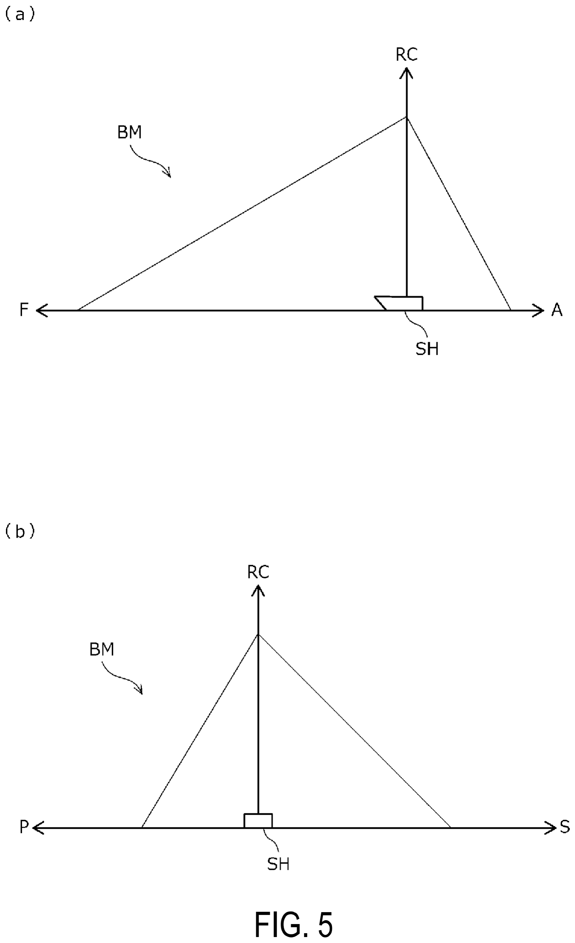

FIG. 4 and FIG. 5 are views for describing a bumper region BM set based on an own ship SH. An arrow F in the figures represents the bow direction, an arrow A represents the stern direction, an arrow S represents the starboard direction, and an arrow P represents the port direction.

FIG. 4 shows a planar distribution of the risk coefficient in the bumper region BM with contour lines. A dashed arrow RD represents the relative movement direction of an other ship OP. FIG. 5(a) shows the distribution of the risk coefficient RC on the bow line of the own ship SH, and FIG. 5(b) shows the distribution of the risk coefficient RC on the beam line of the own ship SH.

The bumper region BM has a risk coefficient RC that becomes higher as it is closer to the own ship SH in each bearing based on the own ship SH. The bumper region BM has a risk coefficient RC that is defined according to the bearing based on the own ship SH, i.e., having a shape that is defined according to the bearing based on the own ship SH.

For example, the bumper region BM has a shape that is wider in the bow direction F than in the stern direction A of the own ship SH. Accordingly, it becomes possible to increase the sensitivity in the bow direction F, which is the traveling direction of the own ship SH.

In addition, the bumper region BM has a shape that is wider in the starboard direction S than in the port direction P of the own ship SH. Accordingly, it becomes possible to increase the sensitivity in the starboard direction S in which the own ship SH becomes a give-way ship in the case where an other ship OP is present.

The shape or the size of the bumper region BM is not necessarily always constant, and may be adaptively set according to, for example, the attributes of the sea area where the own ship SH navigates, the turning performance of the own ship SH, or the ship speed of the own ship SH.

In the example of FIG. 4, the bumper region BM is a quadrilateral formed by connecting points on the bow direction F, the stern direction A, the starboard direction S, and the port direction P with straight lines, but is not limited thereto, and may also be, for example, a shape formed by connecting the points with curves that are convex in directions away from the own ship SH.

In the example of FIG. 5, the risk coefficient RC of the bumper region BM increases linearly as it approaches the own ship SH. However, not limited thereto, the risk coefficient RC may also increase stepwise, exponentially, or logarithmically.

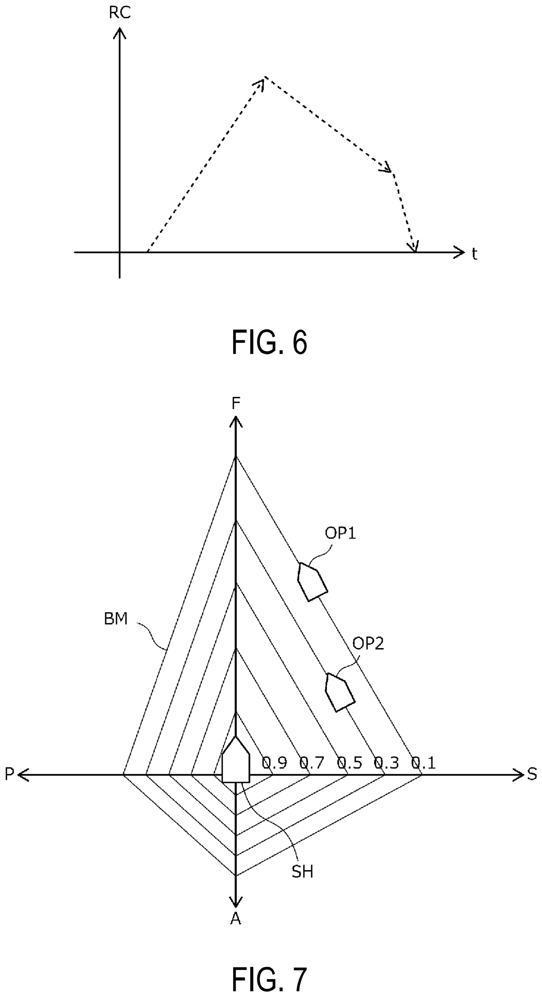

FIG. 6 is a view showing over-time changes in the risk coefficient RC when the other ship OP in FIG. 4 relatively moves in the direction of the dashed arrow RD and intrudes into the bumper region BM. The horizontal axis represents time t, and the vertical axis represents the risk coefficient RC.

When the other ship OP intrudes into the bumper region BM, the risk coefficient RC gradually increases with lapse of time t, and upon exceeding a particular time point, gradually decreases with lapse of time t. The risk coefficient RC increases when the other ship OP approaches the own ship SH, and the risk coefficient RC decreases when the other ship OP moves away from the own ship SH.

The intrusion degree calculating unit 16 calculates the intrusion degree of the other ship OP based on the risk coefficient RC when the intrusion of the other ship OP into the bumper region BM is predicted during navigation of the own ship SH.

Specifically, the intrusion degree calculating unit 16 calculates the risk coefficient RC at each time point (see FIG. 6), and calculates the intrusion degree of the other ship OP based on the calculated risk coefficient RC at each time point. The calculation of the risk coefficient RC at each time point is performed under the assumption that the other ship OP navigates while maintaining the detected speed from the detected position.

For example, the intrusion degree calculating unit 16 may calculate, as the intrusion degree, a maximum value of the risk coefficient RC (i.e., the height of the peak of the risk coefficient RC shown in FIG. 6) when the intrusion of the other ship OP into the bumper region BM is predicted during navigation of the own ship SH. Accordingly, it becomes possible to configure the intrusion degree to be higher as the other ship OP approaches the own ship SH.

In addition, the intrusion degree calculating unit 16 may also calculate, as the intrusion degree, an integral value of the risk coefficient RC (i.e., the area of the peak of the risk coefficient RC shown in FIG. 6) when the intrusion of the other ship OP into the bumper region BM is predicted during navigation of the own ship SH. Accordingly, it becomes possible to configure the intrusion degree to be higher as the other ship OP approaches the own ship SH and as the other ship OP stays longer in the bumper region BM.

Since multiple other ships OP may intrude into the bumper region BM simultaneously or with time differences, the intrusion degree calculating unit 16 calculates the intrusion degree when the intrusion of the multiple other ships OP into the bumper region BM is predicted during navigation of the own ship SH.

Specifically, the intrusion degree calculating unit 16 calculates the risk coefficient RC at each time point for each one of the multiple other ships OP (see FIG. 6), and calculates the intrusion degree based thereon. Not limited thereto, the intrusion degree calculating unit 16 may also calculate the intrusion degree for each one of the multiple other ships OP, and calculate an integrated intrusion degree of these intrusion degrees.

For example, the intrusion degree calculating unit 16 may calculate, as the intrusion degree, a sum of the maximum values or the integral values of the risk coefficient RC when the intrusion of each of the other ships OP into the bumper region BM is predicted during navigation of the own ship SH. Accordingly, it becomes possible to configure the intrusion degree to be higher as the opportunities for the other ships OP to approach the own ship SH increase.

In addition, the intrusion degree calculating unit 16 may also calculate, as the intrusion degree, a maximum value among the maximum values or the integral values of the risk coefficient RC when the intrusion of each of the other ships OP into the bumper region BM is predicted during navigation of the own ship SH. Accordingly, it becomes possible to configure the intrusion degree to be higher as the degree to which any of the other ships OP approaches the own ship SH increases.

In addition, the intrusion degree calculating unit 16 may also calculate, as the intrusion degree, a maximum value among the sums of the risk coefficient RC at each time point when the intrusion of the multiple other ships OP into the bumper region BM is predicted during navigation of the own ship SH. Accordingly, it becomes possible to configure the intrusion degree to be higher as the number of other ships OP that simultaneously intrude into the bumper region BM increases.

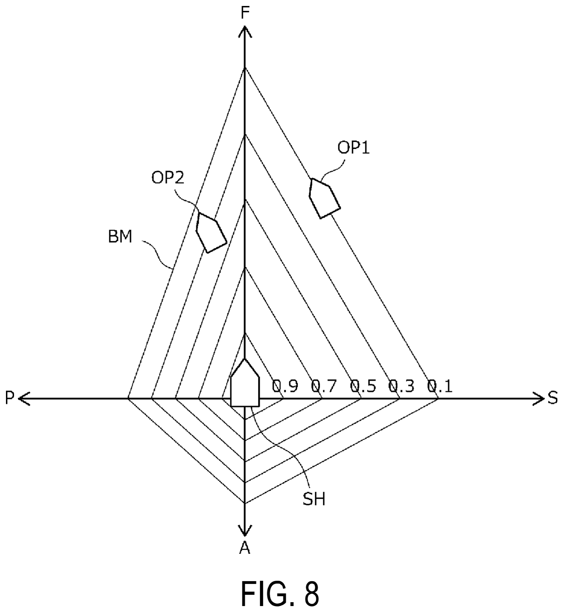

FIG. 7 and FIG. 8 are views for describing calculation of the intrusion degree when multiple other ships OP simultaneously intrude into the bumper region BM.

In the example shown in FIG. 7, other ships OP1 and OP2 are present in the range between the bow direction F and the starboard direction S with respect to the own ship SH. In the example shown in FIG. 8, an other ship OP1 is present in the range between the bow direction F and the starboard direction S with respect to the own ship SH, and an other ship OP2 is present in the range between the bow direction F and the port direction P.

In both examples of FIG. 7 and FIG. 8, since the other ship OP1 is present on the line where the risk coefficient RC is 0.1, and the other ship OP2 is present on the line where the risk coefficient RC is 0.3, the sum of the risk coefficient RC is 0.4.

However, in the example of FIG. 8, the other ships OP1 and OP2 are present simultaneously in both the range between the bow direction F and the starboard direction S and the range between the bow direction F and the port direction P, and in that case, since avoidance is difficult in both the left and right directions, the risk coefficient or the intrusion degree may be corrected to a high value.

For example, when taking the sum of the risk coefficient RC as the intrusion degree, in the example of FIG. 8, the sum of the risk coefficient RC (i.e., the intrusion degree) is corrected to a value higher than 0.4. Accordingly, the intrusion degree in the example of FIG. 8 becomes higher than the intrusion degree in the example of FIG. 7.

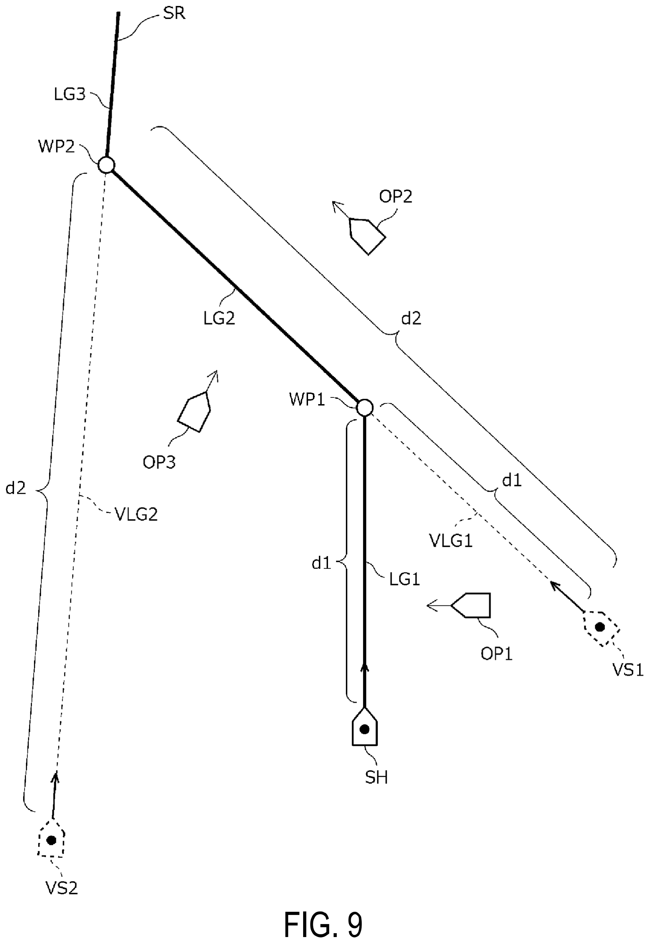

FIG. 9 is a view for describing calculation of the intrusion degree when the own ship SH navigates the scheduled route SR. The intrusion degree calculating unit 16 calculates the intrusion degree during a period in which the own ship SH navigates the scheduled route SR.

The scheduled route SR includes multiple legs LG. The leg LG is a general term for a first leg LG1 to a third leg LG3. Specifically, the scheduled route SR includes the first leg LG1 from the current position of the own ship SH to a first course change point WP1, the second leg LG2 from the first course change point WP1 to a second course change point WP2, and the third leg LG3 from the second course change point WP2 to a third course change point (not shown).

The intrusion degree calculating unit 16 sets a virtual leg VLG corresponding to each leg LG, places a virtual own ship VS on the virtual leg VLG, and calculates the intrusion degree in each leg LG. The virtual leg VLG is a general term for a virtual first leg VLG1 to a virtual second leg VLG2, and the virtual own ship VS is a general term for a virtual first own ship VS1 to a virtual second own ship VS2.

Specifically, the intrusion degree calculating unit 16 sets the virtual first leg VLG1 extending from the first course change point WP1 in a direction opposite to the second leg LG2, and places the virtual first own ship VS1 on the virtual first leg VLG1 to calculate the intrusion degree during a period in which the own ship SH navigates the second leg LG2.

The virtual first leg VLG1 is arranged in a straight line with the second leg LG2 and has a same length d1 as the length d1 of the first leg LG1. The virtual first own ship VS1 is placed at an end of the virtual first leg VLG1 opposite to the first course change point WP1, and moves on the virtual first leg VLG1 at the same speed as the own ship SH.

In addition, the intrusion degree calculating unit 16 sets the virtual second leg VLG2 extending from the second course change point WP1 in a direction opposite to the third leg LG3, and places the virtual own ship VS2 on the virtual second leg VLG2 to calculate the intrusion degree during a period in which the own ship SH navigates the third leg LG3.

The virtual second leg VLG2 is arranged in a straight line with the third leg LG3 and has a same length d2 as the total length d2 of the first leg LG1 and the second leg LG2. The virtual second own ship VS2 is placed at an end of the virtual second leg VLG2 opposite to the second course change point WP2, and moves on the virtual second leg VLG2 at the same speed as the own ship SH.

The intrusion degree calculating unit 16 calculates the intrusion degree of the entire scheduled route SR by performing the above calculations for all legs LG included in the scheduled route SR.

Returning to the description of FIG. 2, the intrusion degree calculating unit 16 calculates the intrusion degree in the case where the own ship navigates each scheduled route for multiple scheduled routes calculated by the route generating unit 14. The route selecting unit 15 selects one of the multiple scheduled routes based on the calculation result of the intrusion degree and outputs to the ship operation control unit 10. The ship operation control unit 10 performs ship operation control of the own ship based on the selected scheduled route.

Specifically, the route selecting unit 15 selects the scheduled route with the lowest intrusion degree among the multiple scheduled routes. Not limited thereto, the route selecting unit 15 may also extract all scheduled routes with an intrusion degree equal to or less than a particular value from the multiple scheduled routes, display the extracted multiple scheduled routes on the display unit 2, and prompt the user to select a scheduled route.

According to the embodiment described above, it becomes possible to perform risk evaluation of the entire scheduled route using the intrusion degree. In particular, by performing risk evaluation of the give-way course calculated during give-way, it becomes possible to select a give-way course with a lower risk.

In this embodiment, the intrusion degree is used for risk evaluation of the scheduled route. However, not limited thereto, for example, the intrusion degree may also be used for collision detection. That is, the intrusion degree may be used as the collision risk value calculated by the collision risk calculating unit 13. In the case of using the intrusion degree as the collision risk value, weighting may be performed such that the intrusion degree becomes higher as the distance or the time until the other ship intrudes into the bumper region becomes shorter.

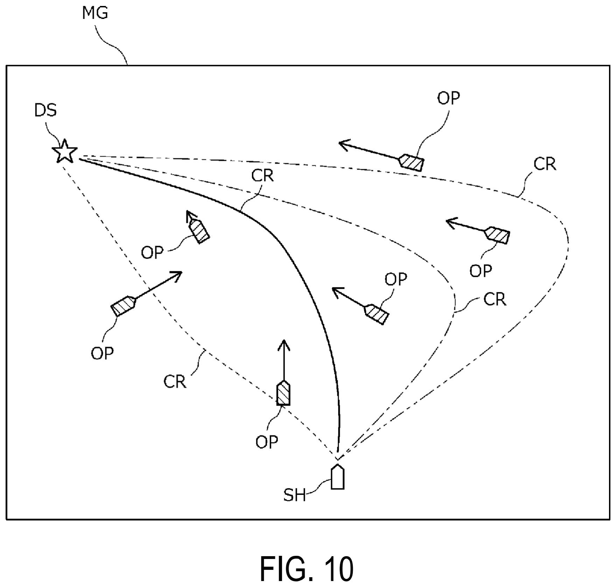

In addition, multiple scheduled routes calculated by the route generating unit 14 or extracted by the route selecting unit 15 may be displayed on the display unit 2. FIG. 10 is a view showing an example of an image MG displayed on the display unit 2. In the image MG, multiple scheduled routes CR from the current position of the own ship SH to a destination DS are displayed. The multiple scheduled routes CR may be displayed in a display mode corresponding to the intrusion degree.

For example, by changing the display mode such as a thickness, a brightness, or a color of the scheduled route CR according to the intrusion degree, it becomes easy to visually recognize the intrusion degree of each scheduled route CR. In addition, since the distribution of intrusion degrees is represented in a manner similar to a heat map, it becomes easy to visually recognize the distribution of intrusion degrees. Furthermore, each leg included in the scheduled route may be displayed in a display mode corresponding to the intrusion degree of each leg.

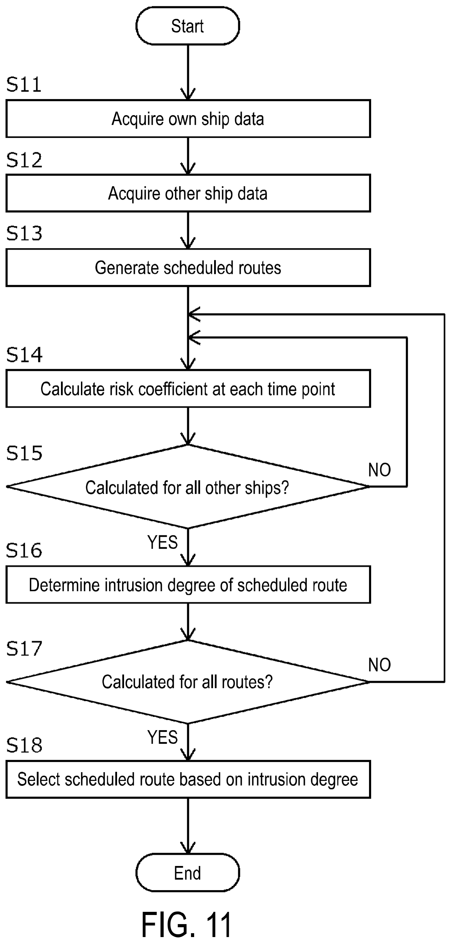

FIG. 11 is a view showing a procedure example of a navigation assistance method according to the first embodiment, which is realized in the navigation assistance device 1. The control unit 20 of the navigation assistance device 1 executes the information processing shown in the figure according to a program.

First, the control unit 20 acquires own ship data representing the position and the speed of the own ship from the GNSS receiver 6 (S11, processing as the own ship data acquiring unit 11).

Next, the control unit 20 acquires other ship data representing the position and the speed of an other ship from the radar 3, the AIS 4, or the camera 5 (S12, processing as the other ship data acquiring unit 12).

Next, the control unit 20 generates multiple scheduled routes (S13, processing as the route generating unit 14). For example, the control unit 20 calculates multiple give-way courses as the scheduled routes in the case where the collision risk is equal to or greater than a particular value.

Next, the control unit 20 calculates a risk coefficient at each time point for one scheduled route among the multiple scheduled routes and one other ship among the multiple other ships (S14, processing as the intrusion degree calculating unit 16). The control unit 20 calculates the risk coefficient at each time point for all the other ships (S15).

Next, the control unit 20 calculates an intrusion degree of one scheduled route among the multiple scheduled routes based on the calculation result of the risk coefficient (S16, processing as the intrusion degree calculating unit 16). The control unit 20 calculates the intrusion degree for all the scheduled routes (S17).

Next, the control unit 20 selects a scheduled route to be used for ship operation control from among the multiple scheduled routes based on the calculation result of the intrusion degree (S18, processing as the route selecting unit 15). The selected scheduled route is outputted to the ship operation control unit 10.

### [Second embodiment]

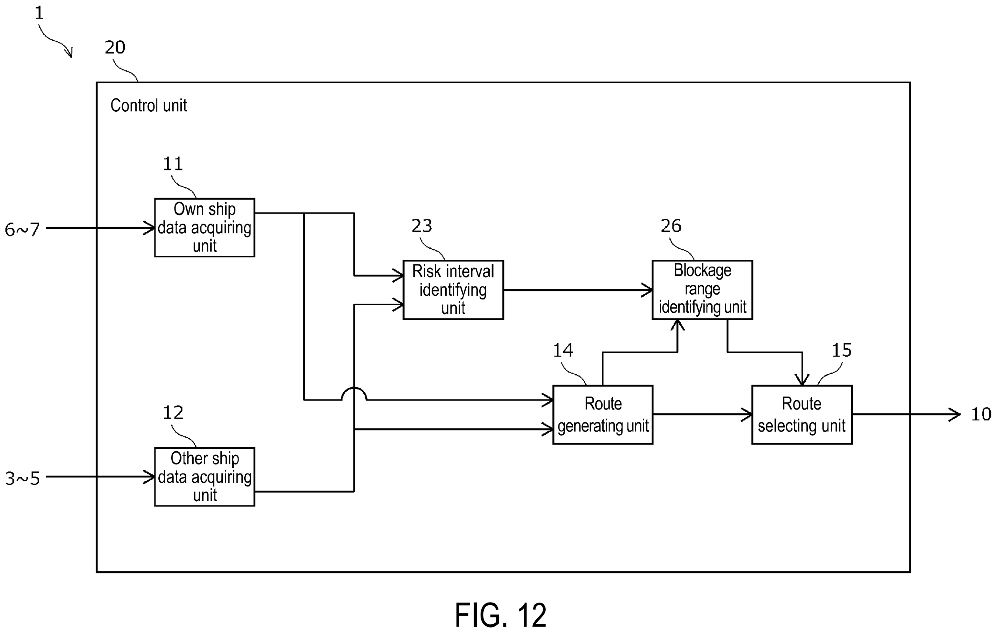

FIG. 12 is a block diagram showing a configuration example of the navigation assistance device 1 according to a second embodiment. In the second embodiment, the control unit 20 includes an own ship data acquiring unit 11, an other ship data acquiring unit 12, a route generating unit 14, a route selecting unit 15, a risk interval identifying unit 23, and a blockage range identifying unit 26.

The risk interval identifying unit 23 identifies a risk interval where there is a risk of collision between the own ship and an other ship based on the own ship data acquired by the own ship data acquiring unit 11 and the other ship data acquired by the other ship data acquiring unit 12. The risk interval corresponds to a collision risk region such as an OZT.

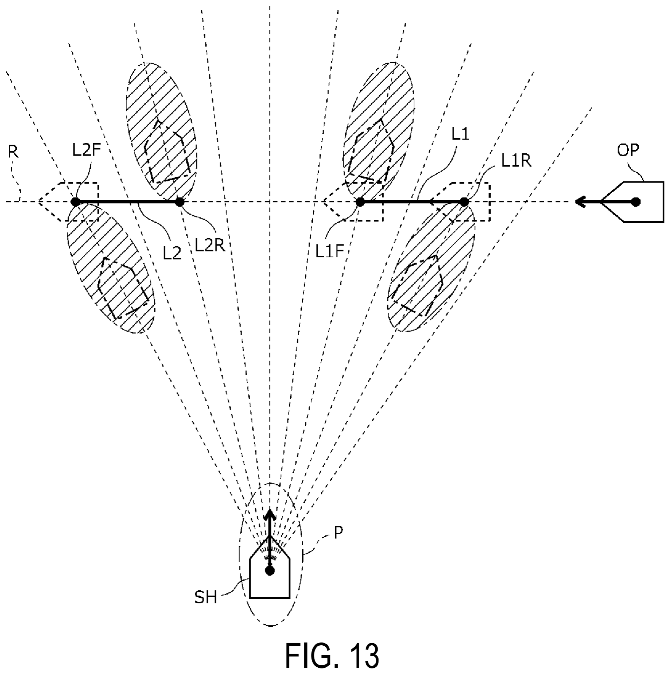

FIG. 13 is a view showing an example of identifying risk intervals. The risk interval identifying unit 23 identifies risk intervals L1 and L2 in a predicted route R of an other ship OP where the risk of collision between the own ship SH and the other ship OP is equal to or greater than a threshold, based on the predicted positions of the own ship SH and the other ship OP at each time point when assuming that the own ship SH changes course and navigates in any direction to cross the predicted route R of the other ship OP.

The calculation of the predicted position of the own ship SH is performed on the assumption that the own ship SH changes course and navigates in any direction at the current position while maintaining the speed. That is, it is assumed that the own ship SH keeps the magnitude of the own ship speed vector constant, and the direction of the own ship speed vector changes to any direction at the reference time point, and thereafter navigation is continued from the own ship position at the reference time point in a constant direction. Thus, the predicted position of the own ship SH at each time point is present on concentric circles centered on the own ship position at the reference time point. The radius of the circle is represented by a product of an elapsed time from the reference time point and the magnitude of the own ship speed vector.

The predicted position of the own ship SH at each time point is represented by multiple concentric circles calculated for each of multiple discrete time points. Not limited thereto, the predicted position of the own ship SH at each time point may also be represented by an equation of circle that includes the elapsed time from the reference time point.

In this embodiment, the predicted position of the own ship SH is calculated on the assumption that the speed of the own ship SH is constant. However, not limited thereto, the speed of the own ship SH may also be treated as a variable that changes over time. That is, as long as the predicted position of the own ship SH corresponding to the elapsed time from the reference time point is obtained, it is also possible that the speed of the own ship SH is not constant. For example, the speed of the own ship SH may gradually increase or decrease with lapse of time.

The calculation of the predicted position of the other ship OP is performed on the assumption that the other ship OP navigates from the current position while maintaining the speed. That is, it is assumed that the magnitude and the direction of the other ship speed vector of the other ship OP are constant, and navigation is continued from the other ship position at the reference time point. Thus, the predicted position of the other ship OP at each time point is present on a straight line that passes through the other ship position at the reference time point and extends the other ship speed vector.

The predicted position of the other ship OP at each time point is represented by multiple discrete points arranged on a straight line, calculated for each of multiple discrete time points. Not limited thereto, the predicted position of the other ship OP at each time point may also be represented by a linear function that passes through the other ship position at the reference time point.

In this embodiment, the predicted position of the other ship OP is calculated on the assumption that the speed of the other ship OP is constant. However, not limited thereto, at least one of the speed and the direction of the other ship OP may also be treated as a variable that changes over time. That is, as long as the predicted position of the other ship OP corresponding to the elapsed time from the reference time point is obtained, it is also possible that the speed of the other ship OP is not constant. For example, the speed of the other ship OP may gradually increase or decrease with lapse of time. In addition, the other ship OP may change course in a particular direction, or may turn at a particular ROT (rate of turn).

The risk interval identifying unit 23 calculates a separation distance between the predicted position of the own ship SH and the predicted position of the other ship OP at each time point, and calculates a risk of collision based on the separation distance and the ship size. As described above, since the predicted position of the own ship SH at a particular time point is represented by a circle, from the circle representing the predicted position of the own ship SH at the particular time point, the risk interval identifying unit 23 extracts the position closest to the predicted position of the other ship OP at the same time point to calculate the separation distance.

For example, in the case where the region of the own ship SH or an alert region P set around the own ship SH overlaps with a point representing the predicted position of the other ship OP, the risk interval identifying unit 23 determines that the risk of collision is equal to or greater than the threshold, and identifies multiple risk intervals L1 and L2 where the risk of collision is equal to or greater than the threshold. Hereinafter, the traveling direction of the other ship OP will also be referred to as the front side, and the opposite direction will also be referred to as the rear side.

For example, of the two risk intervals L1 and L2, for the first risk interval L1 located on the rear side, a rear end L1R of the first risk interval L1 becomes a position at which a front end of the alert region P of the own ship SH contacts the point representing the predicted position of the other ship OP. A front end L1F of the first risk interval L1 becomes a position at which a rear end of the alert region P of the own ship SH contacts the point representing the predicted position of the other ship OP.

On the other hand, of the two risk intervals L1 and L2, for the second risk interval L2 located on the front side, a rear end L2R of the second risk interval L2 becomes a position at which the rear end of the alert region P of the own ship SH contacts the point representing the predicted position of the other ship OP. A front end L2F of the second risk interval L2 becomes a position at which the front end of the alert region P of the own ship SH contacts the point representing the predicted position of the other ship OP.

The range between the first risk interval L1 and the second risk interval L2 becomes a range where the own ship SH crosses the front side of the other ship OP. On the other hand, the range on the rear side of the first risk interval L1 and the range on the front side of the second risk interval L2 become ranges where the own ship SH crosses the rear side of the other ship OP. In the case where the own ship SH crosses the front side of the other ship OP, more attention is required compared to the case where the own ship SH crosses the rear side of the other ship OP.

Not limited thereto, the risk interval identifying unit 23 may also determine that the risk of collision is equal to or greater than the threshold, for example, in the case where the region of the own ship SH or the alert region P set around the own ship SH overlaps with the region of the other ship OP or an alert region set around the other ship OP. In addition, the risk interval identifying unit 23 may also determine that the risk of collision is equal to or greater than the threshold, for example, in the case where the separation distance between the point representing the predicted position of the own ship SH and the point representing the predicted position of the other ship OP is equal to or less than a threshold.

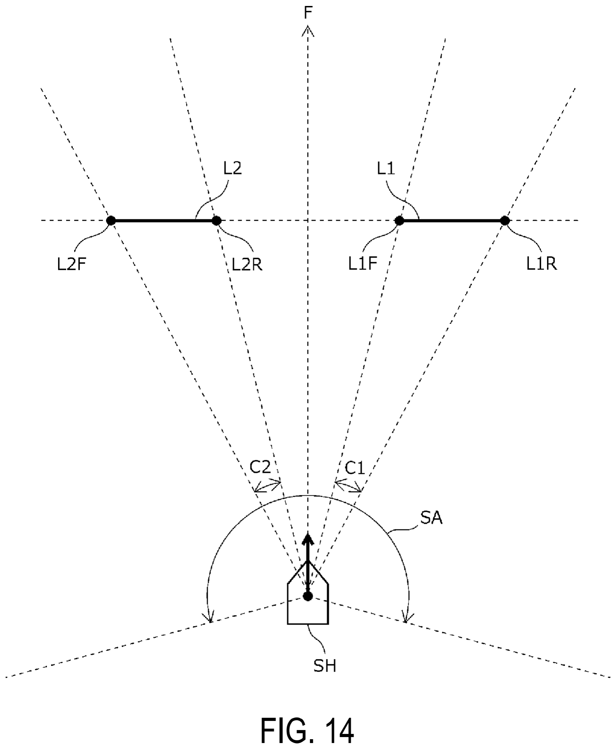

FIG. 14 is a view showing an example of identifying blockage ranges C1 and C2 identified by the blockage range identifying unit 26. The blockage range identifying unit 26 identifies the blockage ranges C1 and C2 representing angle ranges in which the own ship SH crosses the risk intervals L1 and L2 in the case where the own ship SH changes course and navigates in any direction.

The blockage range identifying unit 26 identifies the blockage ranges C1 and C2 within a particular angle range SA that includes the bow direction F of the own ship SH, based on the own ship SH. That is, the blockage range identifying unit 26 identifies the blockage ranges C1 and C2 that are blocked by the risk intervals L1 and L2 within the particular angle range SA.

In addition, the blockage range identifying unit 26 calculates a ratio of the blockage ranges C 1 and C2 to the angle range SA as a blockage degree. That is, a quotient obtained by classifying a total angle of the blockage ranges C1 and C2 by the angle of the angle range SA becomes the blockage degree. The blockage degree represents the degree to which the own ship SH is surrounded by the risk intervals L1 and L2 (collision risk region such as an OZT).

The angle range SA is a fan-shaped range centered on the bow direction F of the own ship SH, excluding the rear range of the own ship SH. The angle range SA corresponds to an area where the own ship SH is capable of changing course. The rear range is, for example, a range exceeding 22 degrees 30 minutes abaft the beam.

The blockage range identifying unit 26 may determine the angle range SA according to the ship operation performance of the own ship SH. Specifically, to set an angle range SA corresponding to the ship operation performance of the own ship SH, the angle range SA may be determined according to the size or the ship speed of the own ship SH. For example, the larger the own ship SH is or the higher the ship speed is, the narrower the angle range SA is; the smaller the own ship SH is or the lower the ship speed is, the wider the angle range SA is.

The blockage range identifying unit 26 may perform the identification of the blockage ranges C1 and C2 by limiting to the risk intervals L1 and L2 that are equal to or less than a particular distance from the own ship SH. In other words, the blockage range identifying unit 26 may exclude risk intervals that are farther than the particular distance from the own ship SH from the identification of the blockage range.

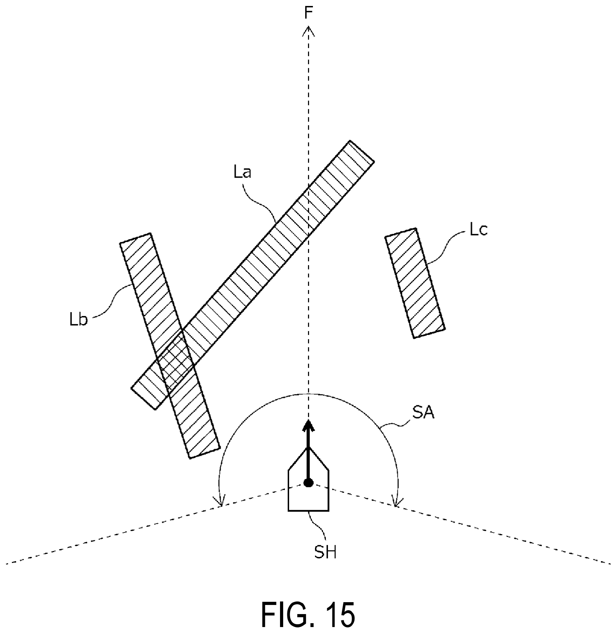

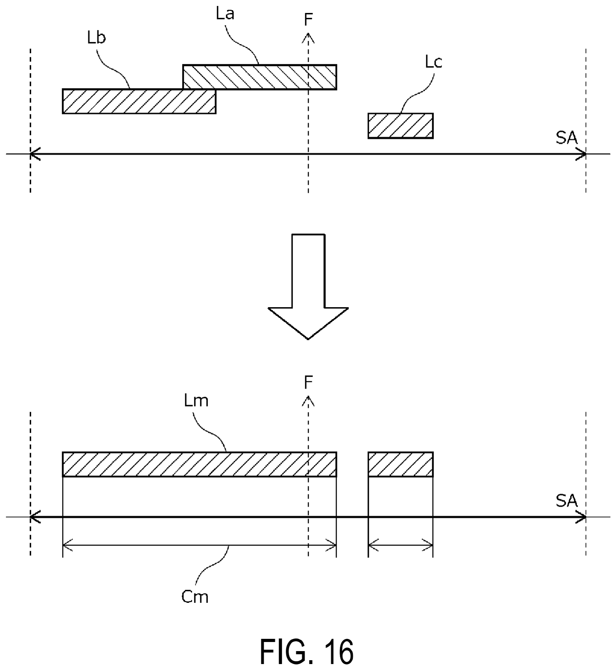

As shown in FIG. 15, the risk interval identifying unit 23 may identify multiple risk intervals La to Lc respectively for multiple other ships. In that case, as shown in FIG. 16, the blockage range identifying unit 26 identifies a blockage range Cm based on the multiple risk intervals La to Lc. This figure is a view in which the angle range SA is expanded linearly.

Specifically, the blockage range identifying unit 26 generates an integrated risk interval Lm that integrates the multiple risk intervals La to Lc with respect to the bearing based on the own ship SH, and identifies the blockage range Cm based on the integrated risk interval Lm. The blockage range identifying unit 26 combines the multiple risk intervals La to Lc while eliminating overlaps to generate the integrated risk interval Lm.

The blockage range identifying unit 26 identifies the blockage range at each time point at which the own ship SH navigates the scheduled route, and calculates the blockage degree. That is, the blockage range identifying unit 26 calculates the blockage degree over the entire scheduled route. In this embodiment, the route selecting unit 15 selects some scheduled routes from among multiple scheduled routes based on the calculation result of the blockage degree calculated by the blockage range identifying unit 26.

Specifically, the risk interval identifying unit 23 identifies a risk interval for each of multiple legs included in the scheduled route of the own ship SH according to the same method as in FIG. 9 above. Then, by identifying the blockage range at each location of the scheduled route and calculating the blockage degree, the blockage range identifying unit 26 calculates the blockage degree of the entire scheduled route.

For example, the risk interval identifying unit 23 may calculate a maximum blockage degree among the blockage degrees at each of the time points at which the own ship SH navigates the scheduled route as the blockage degree of the entire scheduled route, or may calculate a sum or an integral value of the blockage degrees at each time point as the blockage degree of the entire scheduled route.

The blockage range identifying unit 26 calculates the blockage degree in the case where the own ship navigates each scheduled route for multiple scheduled routes calculated by the route generating unit 14. The route selecting unit 15 selects one of the multiple scheduled routes based on the calculation result of the blockage degree and outputs to the ship operation control unit 10. The ship operation control unit 10 performs ship operation control of the own ship based on the selected scheduled route.

Specifically, the route selecting unit 15 selects the scheduled route with the lowest blockage degree from among the multiple scheduled routes. Not limited thereto, the route selecting unit 15 may also extract all scheduled routes with a blockage degree equal to or less than a particular value from the multiple scheduled routes, and may display the extracted multiple scheduled routes on the display unit 2 to prompt the user to select a scheduled route.

In addition, the multiple scheduled routes calculated by the route generating unit 14 or extracted by the route selecting unit 15 may be displayed on the display unit 2 in a display mode corresponding to the blockage degree (see FIG. 10 above).

According to the embodiment described above, it becomes possible to perform risk evaluation of the entire scheduled route using the blockage degree. In particular, by performing risk evaluation of the give-way course calculated during give-way, it becomes possible to select a give-way course with a lower risk.

In this embodiment, the blockage degree is used for risk evaluation of the scheduled route. However, not limited thereto, for example, the blockage degree may also be used for collision detection. That is, the blockage degree may be used as the collision risk value calculated by the collision risk calculating unit 13. In the case of using the blockage degree as the collision risk value, weighting may be performed such that the blockage degree becomes higher as the distance or the time until the risk interval becomes shorter.

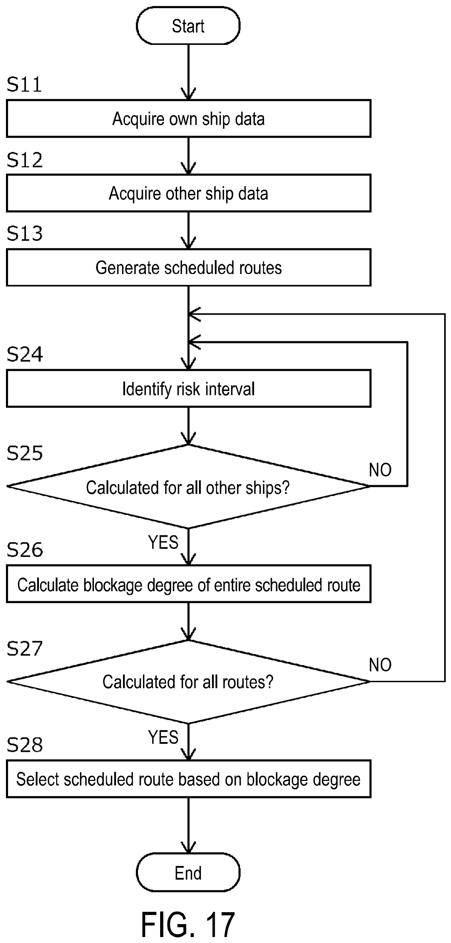

FIG. 17 is a view showing a procedure example of the navigation assistance method according to the second embodiment, which is realized in the navigation assistance device 1. The control unit 20 of the navigation assistance device 1 executes the information processing shown in the figure according to a program.

First, the control unit 20 acquires own ship data representing the position and the speed of the own ship from the GNSS receiver 6 (S11, processing as the own ship data acquiring unit 11).

Next, the control unit 20 acquires other ship data representing the position and the speed of an other ship from the radar 3, the AIS 4, or the camera 5 (S12, processing as the other ship data acquiring unit 12).

Next, the control unit 20 generates multiple scheduled routes (S13, processing as the route generating unit 14). For example, the control unit 20 calculates multiple give-way courses as the scheduled routes in the case where the collision risk is equal to or greater than a particular value.

Next, the control unit 20 identifies a risk interval for one scheduled route among the multiple scheduled routes and one other ship among multiple other ships (S24, processing as the risk interval identifying unit 23). The control unit 20 calculates the risk interval for all the other ships (S25).

Next, the control unit 20 calculates a blockage degree of the entire scheduled route for one scheduled route among the multiple scheduled routes (S26, processing as the blockage range identifying unit 26). The control unit 20 calculates the blockage degree for all the scheduled routes (S27).

Next, the control unit 20 selects a scheduled route to be used for ship operation control from among the multiple scheduled routes based on the calculation result of the blockage degree (S28, processing as the route selecting unit 15). The selected scheduled route is outputted to the ship operation control unit 10.

### [Third embodiment]

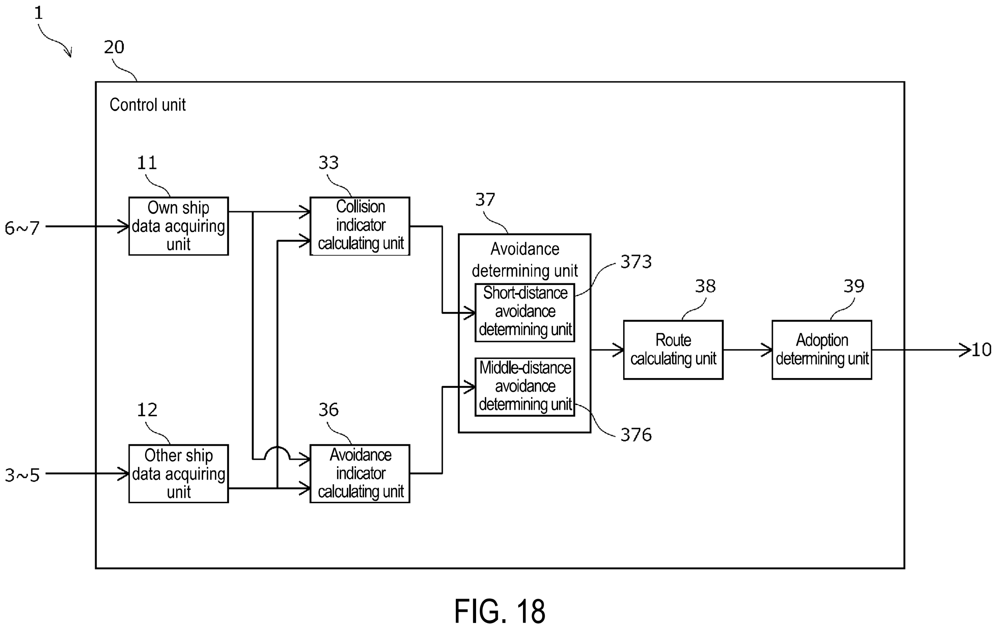

FIG. 18 is a block diagram showing a configuration example of the navigation assistance device 1 according to a third embodiment. In the third embodiment, the control unit 20 includes an own ship data acquiring unit 11, an other ship data acquiring unit 12, a collision indicator calculating unit 33, an avoidance indicator calculating unit 36, an avoidance determining unit 37, a route calculating unit 38, and an adoption determining unit 39. The avoidance determining unit 37 includes a short-distance avoidance determining unit 373 and a middle-distance avoidance determining unit 376.

The collision indicator calculating unit 33 calculates a collision indicator representing a risk of the own ship colliding with an other ship based on the own ship data acquired by the own ship data acquiring unit 11 and the other ship data acquired by the other ship data acquiring unit 12. The collision indicator is an indicator for determining whether an imminent collision that should be avoided is present.

The collision indicator is, for example, a collision risk region such as an OZT. That is, the risk interval (see FIG. 13) identified by the risk interval identifying unit 23 above is calculated as the collision indicator. Not limited thereto, the collision indicator may also be, for example, a TCPA in a CPA collision alarm.

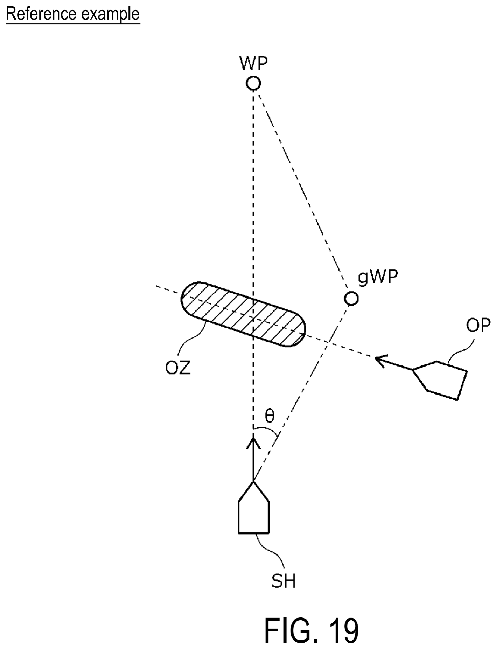

In addition, as shown in a reference example of FIG. 19, in the case where a collision risk region OZ is present on the route from the own ship SH toward a waypoint WP, a waypoint gWP for avoiding the collision risk region OZ is newly set, and an avoidance action is performed to pass therethrough.

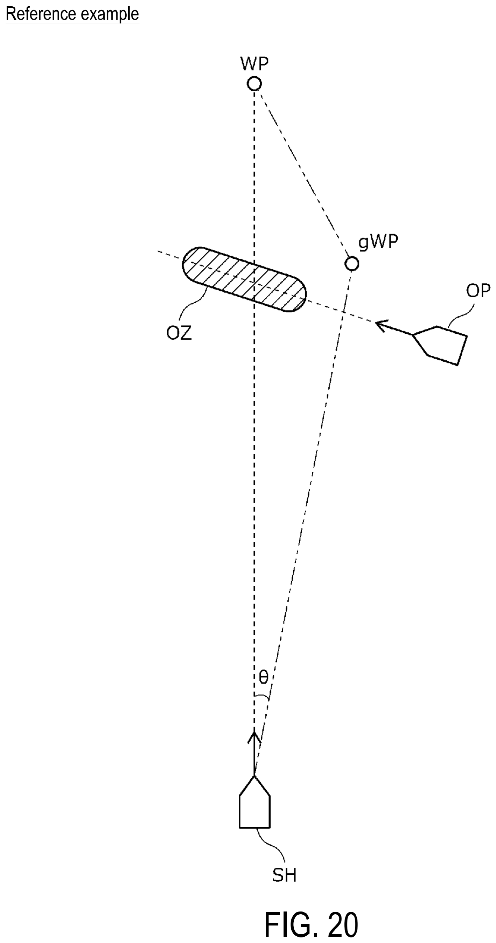

In ship operation by humans, as shown in a reference example of FIG. 20, wherever possible, give-way may be started when there is margin until the collision risk region OZ (i.e., when the time or the distance until the collision risk region OZ is relatively long), and the avoidance action may be performed with a relatively small steering angle θ.

However, in the conventional art, since give-way is started when there is little margin until the collision risk region OZ (i.e., when the time or the distance until the collision risk region OZ is relatively short), an avoidance action must be performed with a relatively large steering angle θ as shown in the reference example of FIG. 19.

Thus, in this embodiment, as described below, by determining whether to avoid a risk located at a middle distance using an avoidance indicator representing the degree to which the own ship should avoid an other ship, a give-way with margin is realized.

The collision indicator is used for avoiding a risk of relatively high urgency present at a short distance, and the avoidance indicator is used for avoiding a risk of relatively low urgency present at a middle distance that is farther than the short distance.

Specifically, the avoidance indicator is used for determining whether a future risk (e.g., including not only collision but also approach or congestion) in the case of navigating the scheduled route or in the case of maintaining the course should be avoided in advance.

The short distance is a range for mainly monitoring a risk of relatively high urgency (presence of an imminent collision that should be avoided) according to the collision indicator. The middle distance is a range farther than the short distance and closer than a long distance where a future risk may be ignored.

Returning to the description of FIG. 18, the avoidance indicator calculating unit 36 calculates an avoidance indicator representing the degree to which the own ship should avoid an other ship, based on the own ship data acquired by the own ship data acquiring unit 11 and the other ship data acquired by the other ship data acquiring unit 12.

The avoidance indicator is, for example, a blockage degree calculated by the blockage range identifying unit 26 above, or an intrusion degree calculated by the intrusion degree calculating unit 16 above. In addition, the avoidance indicator may also be a composite indicator combining the blockage degree and the intrusion degree.

The avoidance determining unit 37 determines whether the own ship should avoid the other ship based on the collision indicator calculated by the collision indicator calculating unit 33 or the avoidance indicator calculated by the avoidance indicator calculating unit 36.

Specifically, the short-distance avoidance determining unit 373 included in the avoidance determining unit 37 determines whether the other ship should be avoided based on the collision indicator calculated by the collision indicator calculating unit 33 when there is a risk at a short distance (i.e., when the distance or the time until the own ship reaches the predicted route of the other ship is smaller than a particular value).

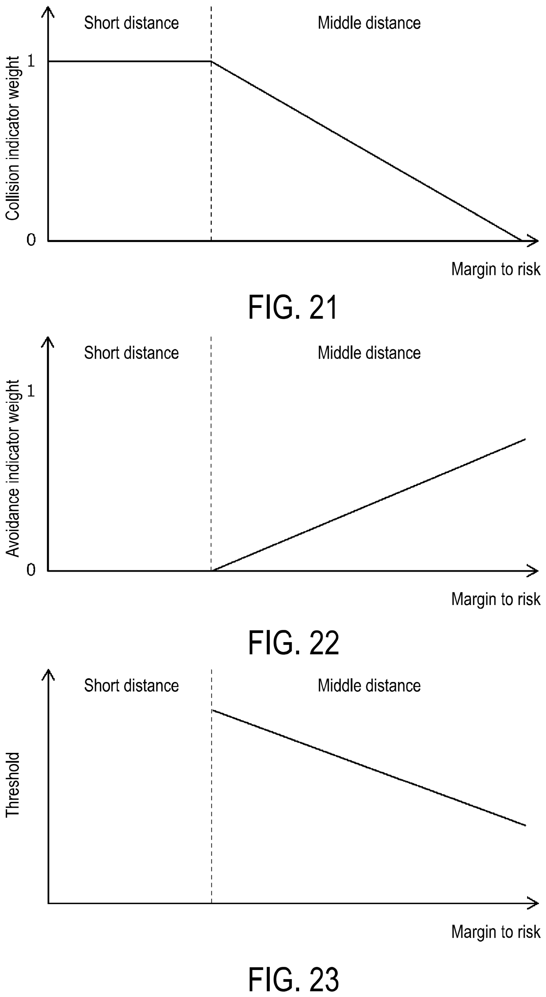

For example, as shown in FIG. 21, for short distances, the short-distance avoidance determining unit 373 assigns a maximum weight (e.g., multiplying by 1) to the collision indicator, and determines whether the weighted collision indicator is equal to or greater than a threshold. Then, the short-distance avoidance determining unit 373 determines that the other ship should be avoided when the weighted collision indicator is equal to or greater than the threshold.

In addition, for middle distances, the short-distance avoidance determining unit 373 assigns to the collision indicator a weight that gradually decreases as the margin to risk (the distance or the time until reaching) increases. Alternatively, for middle distances, the threshold applied to the collision indicator may also be gradually increased as the margin to risk increases.

For middle distances, the weight assigned to the collision indicator may be set to 0. Alternatively, for middle distances, it is also possible not to perform avoidance determination based on the collision indicator.

According to such determination using the collision indicator, it becomes possible to determine avoidance of a risk of relatively high urgency present at a short distance.

On the other hand, the middle-distance avoidance determining unit 376 included in the avoidance determining unit 37 determines whether the other ship should be avoided based on the avoidance indicator calculated by the avoidance indicator calculating unit 36 when there is a risk at a middle distance (i.e., when the distance or the time until the own ship reaches the predicted route of the other ship is greater than a particular value).

For example, as shown in FIG. 22, for middle distances, the middle-distance avoidance determining unit 376 assigns to the avoidance indicator a weight that gradually increases as the margin to risk (the distance or the time until reaching) increases, and determines whether the weighted avoidance indicator is equal to or greater than a threshold. Then, the middle-distance avoidance determining unit 376 determines that the other ship should be avoided in the case where the weighted avoidance indicator is equal to or greater than the threshold.

In addition, for middle distances, the middle-distance avoidance determining unit 376 may calculate a time average of the avoidance indicator, and determine that the other ship should be avoided in the case where the time average of the avoidance indicator is equal to or greater than a threshold. Accordingly, a risk that occurs only momentarily due to turning of the other ship at a middle distance can be filtered out. Instantaneous values of the collision indicator may be used for determination at short distances, and time averages of the avoidance indicator may be used for determination at middle distances.

In addition, for short distances, the middle-distance avoidance determining unit 376 sets the weight assigned to the avoidance indicator to 0. Not limited thereto, it is also possible not to perform avoidance determination based on the avoidance indicator for short distances.

As shown in FIG. 23, for middle distances, the middle-distance avoidance determining unit 376 may also gradually decrease the threshold applied to the avoidance indicator as the margin to risk increases.

According to such determination using the avoidance indicator, it becomes possible to determine avoidance of a risk of relatively low urgency present at a middle distance.

The route calculating unit 38 calculates a give-way course for the own ship to avoid the other ship in the case where the avoidance determining unit 37 determines that the other ship should be avoided (in a manner similar to the route generating unit 14 above).

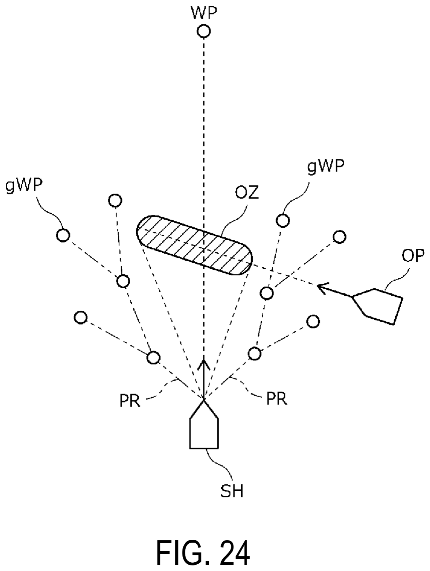

For example, as shown in FIG. 24, when there is a collision risk region OZ at a short distance (i.e., when the distance or the time until reaching is smaller than a particular value), the route calculating unit 38 calculates a give-way course by searching for partial routes PR (legs) sequentially from the current position of the own ship SH in a range excluding the collision risk region OZ, which is the predicted position of the other ship OP. For example, according to a method such as binary search, a give-way course to the destination WP is searched while narrowing down the partial routes PR sequentially from the current position of the own ship SH.

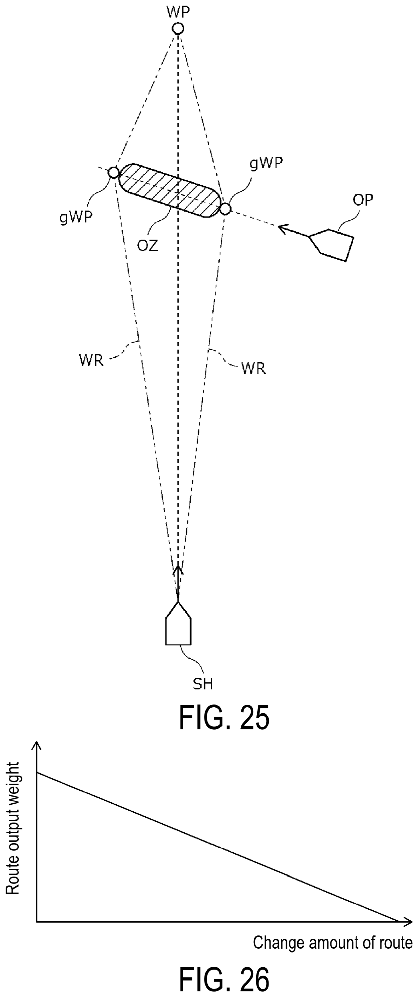

In addition, as shown in FIG. 25, when there is a collision risk region OZ at a middle distance (i.e., when the distance or the time until reaching is greater than the particular value), the route calculating unit 38 calculates a give-way course by obtaining a shorter overall route WP from the current position of the own ship SH to the destination position WP that avoids the collision risk region OZ, which is the predicted position of the other ship OP. For example, according to a method such as Dijkstra's algorithm, a shortest overall route WP from the current position of the own ship SH to the destination WP is searched, with endpoints of the collision risk region OZ taken as nodes gWP.

The adoption determining unit 39 determines whether to adopt the give-way course generated by the route calculating unit 38 based on a difference between the current scheduled route of the own ship and the give-way course calculated by the route calculating unit 38, and outputs the give-way course to the ship operation control unit 10 in the case of determining to adopt the give-way course. The ship operation control unit 10 performs ship operation control of the own ship based on the give-way course.

Specifically, the adoption determining unit 39 adopts the give-way course when a change amount of the route from the scheduled route of the own ship to the give-way course is smaller than a threshold, and does not adopt the give-way course when the change amount of the route is greater than the threshold. In the case of not adopting the give-way course, calculation of the give-way course by the route calculating unit 38 and determination of adoption by the adoption determining unit 39 are executed again.

In addition, the adoption determining unit 39 may compare the avoidance indicator such as the blockage degree or the intrusion degree, or other risk values, of the scheduled route and the give-way course, adopts the give-way course when a decrease amount of the risk value is greater than a threshold, and does not adopt the give-way course when the decrease amount is smaller than the threshold. In particular, the decrease amount of the risk value may be emphasized for short distances, and the change amount of the route may be emphasized for middle distances.

Herein, the scheduled route of the own ship also includes the case of simply maintaining the ship course. The change amount of the route corresponds to the steering angle θ during give-way (see FIG. 19 and FIG. 20).

For example, as shown in FIG. 26, the adoption determining unit 39 sets a route output weight to be larger as the change amount of the route is smaller, sets the route output weight to be smaller as the change amount of the route is larger, adopts the give-way course in the case where the route output weight is equal to or greater than a threshold, and does not adopt the give-way course in the case where the route output weight is less than a particular threshold.

According to such adoption determination, it becomes possible to suppress significant fluctuations in the route and manage with a simple avoidance action.

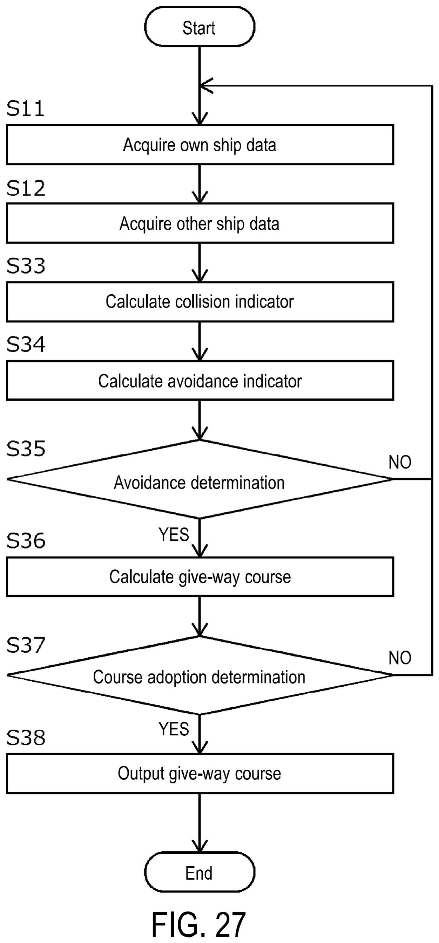

FIG. 27 is a view showing a procedure example of the navigation assistance method according to the third embodiment, which is realized in the navigation assistance device 1. The control unit 20 of the navigation assistance device 1 executes the information processing shown in the figure according to a program.

First, the control unit 20 acquires own ship data representing the position and the speed of the own ship from the GNSS receiver 6 (S11, processing as the own ship data acquiring unit 11).

Next, the control unit 20 acquires other ship data representing the position and the speed of an other ship from the radar 3, the AIS 4, or the camera 5 (S12, processing as the other ship data acquiring unit 12).

Next, the control unit 20 calculates a collision indicator representing a risk of the own ship colliding with the other ship based on the own ship data and the other ship data (S33, processing as the collision indicator calculating unit 33). The collision indicator is, for example, a collision risk region such as an OZT.

Next, the control unit 20 calculates an avoidance indicator representing the degree to which the own ship should avoid the other ship based on the own ship data and the other ship data (S34, processing as the avoidance indicator calculating unit 36). The avoidance indicator is, for example, the blockage degree or the intrusion degree.

Next, the control unit 20 determines whether the own ship should avoid the other ship based on the collision indicator or the avoidance indicator (S35, processing as the avoidance determining unit 37). Specifically, the control unit 20 determines whether the other ship should be avoided based on the collision indicator for short distances, and determines whether the other ship should be avoided based on the avoidance indicator for middle distances.

In the case of not determining that the own ship should avoid the other ship (S35: NO), the control unit 20 updates the collision indicator and the avoidance indicator and repeats the avoidance determination (S11 to S35).

In contrast, in the case of determining that the own ship should avoid the other ship (S35: YES), the control unit 20 calculates a give-way course for the own ship to avoid the other ship (S36, processing as the route calculating unit 38).

Next, the control unit 20 determines whether to adopt the give-way course (S37, processing as the adoption determining unit 39). Specifically, the control unit 20 determines whether to adopt or reject the give-way course according to a change amount of the route.

In the case of determining not to adopt the give-way course (S37: NO), the control unit 20 calculates a give-way course again, updates the collision indicator and the avoidance indicator, and repeats the avoidance determination and the adoption determination (S11 to S37).

In contrast, in the case of determining to adopt the give-way course (S37: YES), the control unit 20 outputs the give-way course to the ship operation control unit 10 (S38). The give-way course outputted to the ship operation control unit 10 is used for ship operation control.

### [Fourth embodiment]

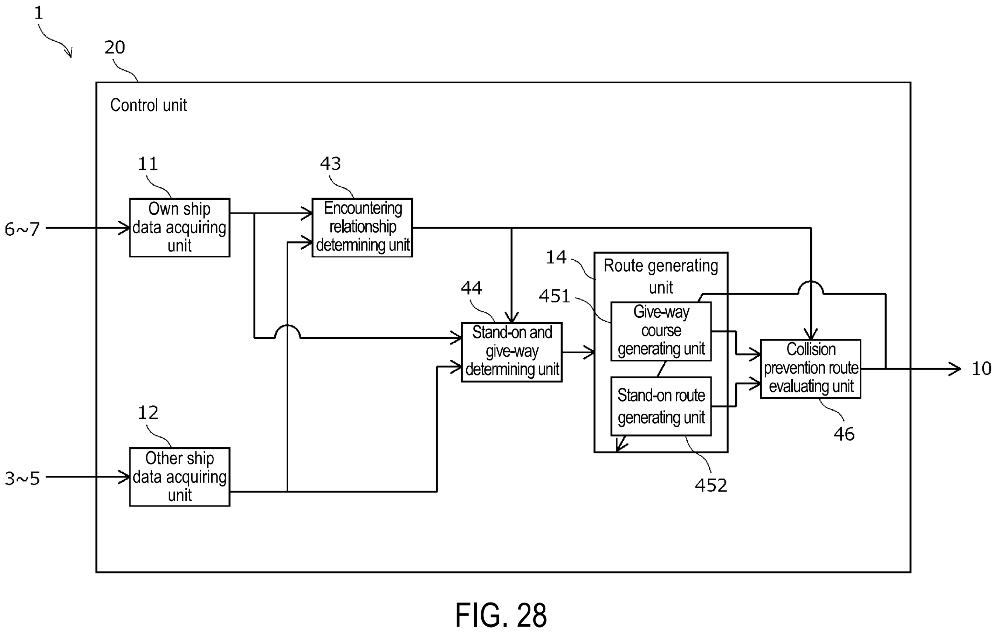

FIG. 28 is a block diagram showing a configuration example of the navigation assistance device 1 according to a fourth embodiment. In the fourth embodiment, the control unit 20 includes an own ship data acquiring unit 11, an other ship data acquiring unit 12, a route generating unit 14, an encountering relationship determining unit 43, a stand-on and give-way determining unit 44, and a collision prevention route evaluating unit 46. The route generating unit 14 includes a give-way course generating unit 451 and a stand-on route generating unit 452.

A give-way course generated for collision avoidance is capable of avoiding a collision, but may not comply with regulations for preventing collisions. The regulations for preventing collisions are, for example, the Convention on the International Regulations for Preventing Collisions at Sea (COLREGs) or the Act on Preventing Collisions at Sea in Japan.

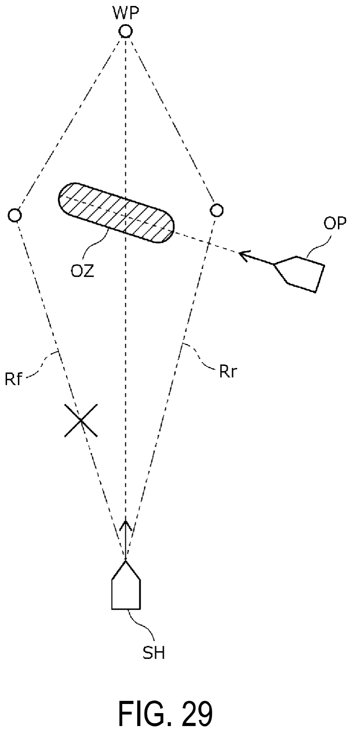

For example, as shown in FIG. 29, in the case where the own ship SH avoids a collision risk region OZ of an other ship OP approaching from the starboard side, a route Rf crossing the bow direction of the other ship OP and a route Rr crossing the stern direction of the other ship OP may be generated. However, in the regulations for preventing collisions, the route Rf crossing the bow direction of the other ship OP is prohibited.

Thus, in this embodiment, as described below, an encountering relationship between the own ship and the other ship is determined, and furthermore, upon determining to which of a give-way ship or a stand-on ship the own ship and the other ship correspond, it is evaluated whether the scheduled route complies with the regulations for preventing collisions.

As shown in FIG. 28, the encountering relationship determining unit 43 determines the encountering relationship between the own ship and the other ship based on the own ship data acquired by the own ship data acquiring unit 11 and the other ship data acquired by the other ship data acquiring unit 12. Specifically, the encountering relationship determining unit 43 calculates a course difference between the own ship and the other ship, and classifies the encountering relationship according to the position of the other ship based on the own ship and the course difference.

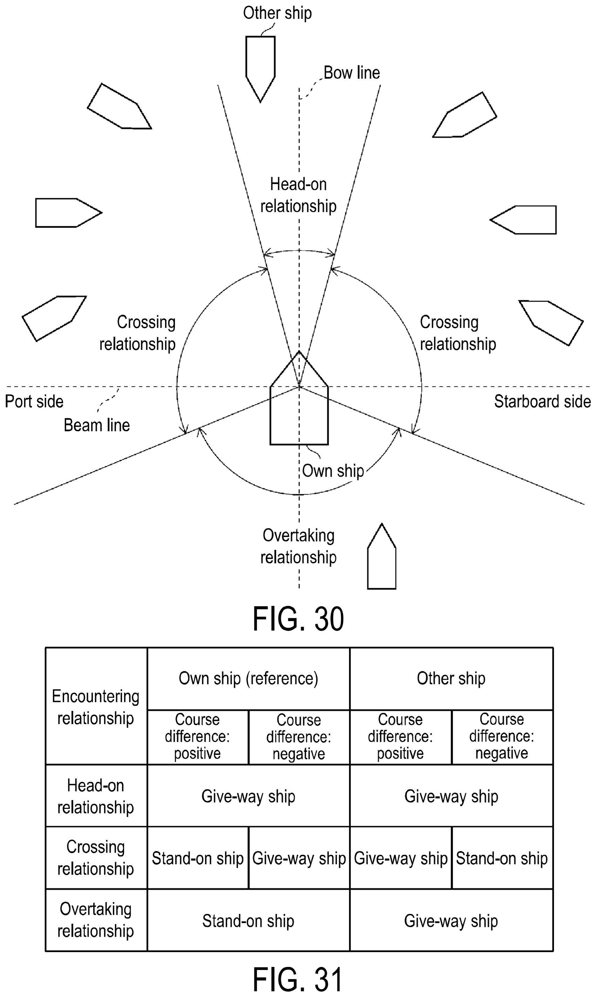

FIG. 30 is a view illustrating the encountering relationship between the own ship and the other ship. The encountering relationship includes a head-on relationship, a crossing relationship, and an overtaking relationship.

The head-on relationship is a relationship in which the own ship and the other ship meet head-on or nearly head-on. For example, in the case where the other ship is at a position on the front side of the own ship, and the ship course of the other ship is opposite to the ship course of the own ship (the course difference is approximately 180 degrees), it is determined as a head-on relationship.

The overtaking relationship is a relationship in which the other ship overtakes the own ship from a position on the rear side of the own ship. The position on the rear side of the own ship is, for example, a range exceeding 22 degrees 30 minutes abaft the beam of the own ship. For example, in the case where the other ship is at a position on the rear side of the own ship, and the ship course of the other ship is close to the ship course of the own ship, it is determined as an overtaking relationship.

The crossing relationship is a relationship in which one of the own ship and the other ship crosses the route of the other of the own ship and the other ship. For example, in the case where the other ship is in a range of the port side with respect to the own ship, and the ship course of the other ship is oriented toward the starboard side of the own ship, or in the case where the other ship is on the starboard side with respect to the own ship, and the ship course of the other ship is oriented toward the port side of the own ship, it is determined as a crossing relationship.

Returning to the description of FIG. 28, the stand-on and give-way determining unit 44 determines whether the own ship or the other ship corresponds to a stand-on ship, corresponds to a give-way ship, or corresponds to neither, based on the own ship data acquired by the own ship data acquiring unit 11, the other ship data acquired by the other ship data acquiring unit 12, and the encountering relationship determined by the encountering relationship determining unit 43 (hereinafter referred to as stand-on and give-way determination).

In the stand-on and give-way determination, upon determining one of the own ship and the other ship to be a stand-on ship or a give-way ship, the other is simultaneously determined to be a stand-on ship or a give-way ship.

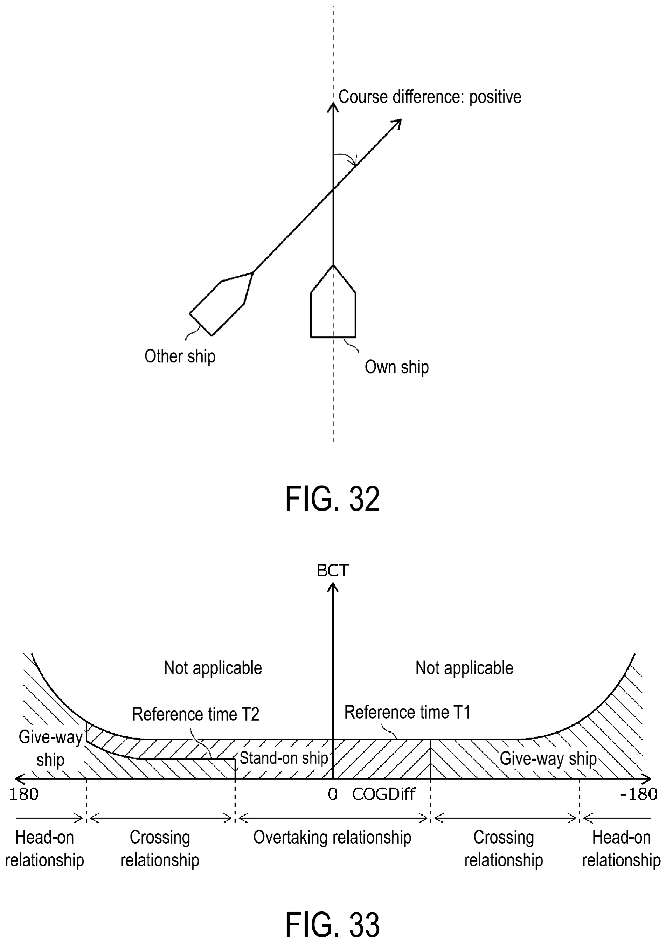

FIG. 31 is a view illustrating the relationship between a stand-on ship and a give-way ship. FIG. 32 is a view illustrating positive and negative course differences. A case where the ship course of the other ship deviates in the clockwise direction with respect to the ship course of the own ship is taken as "positive", and a case of deviating in the counterclockwise direction is taken as "negative".

The case where the ship course of the other ship deviates in the clockwise direction with respect to the ship course of the own ship refers to the case where the other ship approaches from the port side with respect to the own ship, i.e., the case where the other ship sees the own ship on the starboard side. The case where the ship course of the other ship deviates in the counterclockwise direction with respect to the ship course of the own ship refers to the case where the other ship approaches from the starboard side with respect to the own ship, i.e., the case where the own ship sees the other ship on the starboard side.

In the case of a head-on relationship, both the own ship and the other ship become "give-way ships" regardless of the positive or negative course difference.

In the case where the course difference is positive in a crossing relationship, i.e., in the case where the other ship sees the own ship on the starboard side, the own ship becomes a "stand-on ship" and the other ship becomes a "give-way ship".

Conversely, in the case where the course difference is negative in a crossing relationship, i.e., in the case where the own ship sees the other ship on the starboard side, the own ship becomes a "give-way ship" and the other ship becomes a "stand-on ship".

In the case of an overtaking relationship, the own ship becomes a "stand-on ship" and the other ship becomes a "give-way ship" regardless of the positive or negative course difference.

Hereinafter, details of the stand-on and give-way determination performed by the stand-on and give-way determining unit 44 will be described with reference to FIG. 33 to FIG. 36. The stand-on and give-way determining unit 44 determines that the own ship and the other ship correspond to a stand-on ship or a give-way ship in the case where an indicator representing the approach of the other ship to the own ship reaches a determination criterion defined in advance.

The indicator representing the approach of the other ship to the own ship is, for example, a time until the other ship crosses the bow line of the own ship (BCT: Bow Crossing Time). Instead of this, a time until the other ship makes the closest approach to the own ship (TCPA: Time to Closest Point of Approach) may also be used. In addition, the indicator representing the approach of the other ship to the own ship may also be, for example, an inter-ship distance between the own ship and the other ship.

The determination criterion is defined according to the course difference between the own ship and the other ship. That is, the determination criterion is defined for each course difference between the own ship and the other ship, and the determination criterion also changes with changes in the course difference in at least a part of the range of the course difference.

Specifically, the stand-on and give-way determining unit 44 determines that the own ship and the other ship correspond to a stand-on ship or a give-way ship in the case where the BCT is equal to or less than a reference time T1 or in the case where the inter-ship distance is equal to or less than a reference distance D1. In contrast, the stand-on and give-way determining unit 44 determines that the own ship and the other ship correspond to neither a stand-on ship nor a give-way ship in the case where the BCT exceeds the reference time T1 and in the case where the inter-ship distance exceeds the reference distance D1.

In this embodiment, whether the own ship and the other ship correspond to a stand-on ship or a give-way ship is determined according to the logical OR of the condition related to the BCT and the condition related to the inter-ship distance. However, not limited thereto, the determination may also be performed according to the logical AND of the two conditions, or the determination may also be performed using only one of the two conditions.

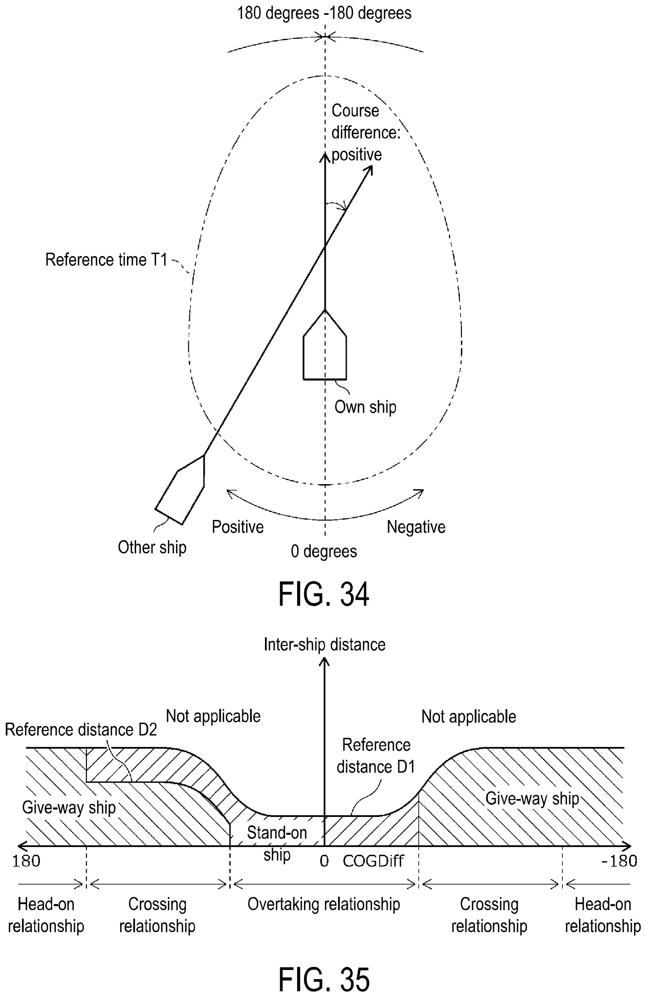

FIG. 33 and FIG. 34 are graphs showing the relationship between the course difference (COGdiff: Course Over Ground Difference) of the own ship and the other ship, and reference times T1 and T2 of the BCT. Since the encountering relationship roughly corresponds to the course difference, FIG. 33 also shows the relationship between the course difference and the encountering relationship. FIG. 34 shows a virtual frame representing the reference time T1 surrounding the own ship to make it easy to understand the relationship between the course difference and the reference time T1.

As shown in FIG. 33, in a part of the range where the course difference is large, the reference time T1 increases with the increase in the course difference. In a range where the course difference is smaller than the above range, the reference time T1 is constant. Accordingly, as shown in FIG. 34, the frame representing the reference time T1 extends to the front side of the own ship, and the larger the course difference is, the earlier the timing of being determined to correspond to a stand-on ship or a give-way ship is.

The relationship between the course difference and the reference time T1 is not limited to this example, and for example, the reference time T1 may also increase with the increase in the course difference in the entire range of the course difference, or the reference time T1 may also increase stepwise with the increase in the course difference, as in the case of the reference distance D1 to be described later (see FIG. 35).

The stand-on and give-way determining unit 44 determines that the own ship corresponds to a give-way ship in the case where the encountering relationship is a head-on relationship and the BCT is equal to or less than the reference time T1. At this time, the other ship is also determined to correspond to a give-way ship.

The stand-on and give-way determining unit 44 determines that the own ship corresponds to a give-way ship in the case where the encountering relationship is a crossing relationship in which the own ship sees the other ship on the starboard side (i.e., a crossing relationship with a negative course difference) and the BCT is equal to or less than the reference time T1. At this time, the other ship is determined to correspond to a stand-on ship.

The stand-on and give-way determining unit 44 determines that the own ship corresponds to a stand-on ship in the case where the encountering relationship is an overtaking relationship and the BCT is equal to or less than the reference time T1. At this time, the other ship is determined to correspond to a give-way ship.

The stand-on and give-way determining unit 44 determines that the own ship corresponds to a stand-on ship in the case where the encountering relationship is a crossing relationship in which the own ship sees the other ship on the port side (i.e., a crossing relationship with a positive course difference) and the BCT is equal to or less than the reference time T1. At this time, the other ship is determined to correspond to a give-way ship.

In addition, the stand-on and give-way determining unit 44 may determine that the own ship corresponds to a give-way ship in the case where, after the own ship is determined to correspond to a stand-on ship, the BCT further decreases and becomes equal to or less than a reference time T2 that is smaller than the reference time T1. That is, although the own ship is a stand-on ship and the other ship is a give-way ship, the other ship does not give way and further approaches, causing the BCT to further decrease, and in that case, the determination result is switched from a stand-on ship to a give-way ship.

In this embodiment, the reference time T2 for switching from a stand-on ship to a give-way ship is set only in the case of a crossing relationship in which the own ship sees the other ship on the port side (i.e., a crossing relationship with a positive course difference). However, not limited thereto, the reference time T2 may also be set in the case of an overtaking relationship.

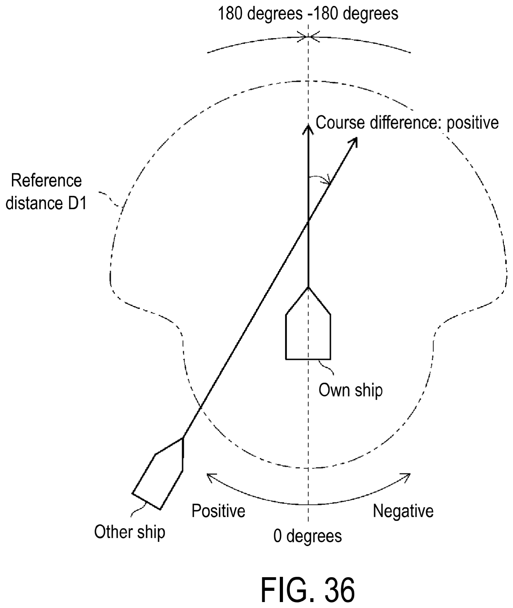

FIG. 35 and FIG. 36 are graphs showing the relationship between the course difference (COGdift) of the own ship and other ship and reference distances D1 and D2 of the inter-ship distance. Since the encountering relationship roughly corresponds to the course difference, FIG. 35 also shows the relationship between the course difference and the encountering relationship. FIG. 36 shows a virtual frame representing the reference distance D1 surrounding the own ship to make it easy to understand the relationship between the course difference and the reference distance D1.

As shown in FIG. 35, in a part of the range where the course difference is moderate, the reference distance D1 increases with the increase in the course difference. In ranges where the course difference is larger and smaller than the above range, the reference distance D1 is constant. That is, the reference distance D1 increases stepwise with the increase in the course difference. Accordingly, as shown in FIG. 36, the frame representing the reference distance D1 has a larger front part than the rear part, and the larger the course difference is, the earlier the timing of being determined to correspond to a stand-on ship or a give-way ship is.

The relationship between the course difference and the reference distance D1 is not limited to this example, and for example, the reference distance D1 may also increase with the increase in the course difference in the entire range of the course difference, or the reference distance D1 may also increase exponentially in a range where the course difference is large, as in the case of the reference time T1 described above (see FIG. 33).

The stand-on and give-way determining unit 44 determines that the own ship corresponds to a give-way ship in the case where the encountering relationship is a head-on relationship and the inter-ship distance is equal to or less than the reference distance D1. At this time, the other ship is also determined to correspond to a give-way ship.

The stand-on and give-way determining unit 44 determines that the own ship corresponds to a give-way ship in the case where the encountering relationship is a crossing relationship in which the own ship sees the other ship on the starboard side (i.e., a crossing relationship with a negative course difference) and the inter-ship distance is equal to or less than the reference distance D1. At this time, the other ship is determined to correspond to a stand-on ship.

The stand-on and give-way determining unit 44 determines that the own ship corresponds to a stand-on ship in the case where the encountering relationship is an overtaking relationship and the inter-ship distance is equal to or less than the reference distance D1. At this time, the other ship is determined to correspond to a give-way ship.

The stand-on and give-way determining unit 44 determines that the own ship corresponds to a stand-on ship in the case where the encountering relationship is a crossing relationship in which the own ship sees the other ship on the port side (i.e., a crossing relationship with a positive course difference) and the inter-ship distance is equal to or less than the reference distance D1. At this time, the other ship is determined to correspond to a give-way ship.

In addition, the stand-on and give-way determining unit 44 may determine that the own ship corresponds to a give-way ship in the case where, after the own ship is determined to correspond to a stand-on ship, the inter-ship distance further becomes shorter and becomes equal to or less than a reference distance D2 that is smaller than the reference distance D1. That is, although the own ship is a stand-on ship and the other ship is a give-way ship, the other ship does not give way and further approaches, causing the inter-ship distance to further decrease, and in that case, the determination result is switched from a stand-on ship to a give-way ship.

In this embodiment, the reference distance D2 for switching from a stand-on ship to a give-way ship is set only in the case of a crossing relationship in which the own ship sees the other ship on the port side (i.e., a crossing relationship with a positive course difference). However, not limited thereto, the reference distance D2 may also be set in the case of an overtaking relationship.

The stand-on and give-way determining unit 44 may further add "whether the other ship is approaching the own ship" to the determination criterion. That is, the stand-on and give-way determining unit 44 determines that the own ship and the other ship correspond to a stand-on ship or a give-way ship in the case where the BCT is equal to or less than the reference time T1 or in the case where the inter-ship distance is equal to or less than the reference distance D1, and in the case where the other ship is approaching the own ship.

On the other hand, the stand-on and give-way determining unit 44 determines that the own ship and the other ship correspond to neither a stand-on ship nor a give-way ship in the case where the other ship is moving away from the own ship, even in the case where the BCT is equal to or less than the reference time T1 or in the case where the inter-ship distance is equal to or less than the reference distance D1.

Whether the other ship is approaching the own ship may be determined, for example, according to the TCPA being positive or negative. In the case where the other ship is approaching the own ship, the TCPA is a positive value, and in the case where the other ship is moving away from the own ship, the TCPA is a negative value.

In that case, after the encountering relationship is resolved (e.g., after a head-on encounter, after crossing, or after overtaking), since it is determined that the own ship and the other ship correspond to neither a stand-on ship nor a give-way ship, the encountering relationship determining unit 43 may determine the encountering relationship based only on the course difference between the own ship and the other ship without considering the positions of the own ship and the other ship.

In addition, even in the case where the BCT is equal to or less than the reference time T1 or in the case where the inter-ship distance is equal to or less than the reference distance D1, after the own ship or the other ship becomes a give-way ship and takes an avoidance action, the stand-on and give-way determining unit 44 may determine that the own ship and the other ship correspond to neither a stand-on ship nor a give-way ship.

Whether the own ship or the other ship has taken an avoidance action may be determined according to a change in the course difference (COGdift) between the own ship and the other ship, or a change of the BCT or the inter-ship distance to the non-corresponding side.

In this case as well, after the own ship or the other ship takes an avoidance action, since it is determined that the own ship and the other ship correspond to neither a stand-on ship nor a give-way ship, the encountering relationship determining unit 43 may determine the encountering relationship based only on the course difference between the own ship and the other ship without considering the positions of the own ship and the other ship.

Returning to the description of FIG. 28, the route generating unit 14 calculates a scheduled route in the case where the stand-on and give-way determining unit 44 determines that the own ship corresponds to a stand-on ship or a give-way ship.

Specifically, the give-way course generating unit 451 included in the route generating unit 14 calculates a scheduled route for acting as a give-way ship (hereinafter also referred to as a "give-way course") in the case where the stand-on and give-way determining unit 44 determines that the own ship corresponds to a give-way ship. The give-way course is generated to avoid the other ship.

In addition, the stand-on route generating unit 452 included in the route generating unit 14 calculates a scheduled route for acting as a stand-on ship (hereinafter also referred to as a "stand-on course") in the case where the stand-on and give-way determining unit 44 determines that the own ship corresponds to a stand-on ship. The stand-on course is a route that does not perform avoidance of the other ship.

The collision prevention route evaluating unit 46 evaluates the scheduled route generated by the route generating unit 14 according to the encountering relationship determined by the encountering relationship determining unit 43. Specifically, the collision prevention route evaluating unit 46 evaluates whether the scheduled route complies with the regulations for preventing collisions.

The collision prevention route evaluating unit 46 outputs the scheduled route to the ship operation control unit 10 in the case where the evaluation result of the scheduled route satisfies a particular criterion. The ship operation control unit 10 performs ship operation control of the own ship based on the scheduled route. In contrast, in the case where the evaluation result of the scheduled route does not satisfy the particular criterion, the collision prevention route evaluating unit 46 causes the route generating unit 14 to calculate a new scheduled route and executes the evaluation of the scheduled route again.

The collision prevention route evaluating unit 46 evaluates whether the give-way course is appropriate in the case where the own ship is determined to be a give-way ship and a give-way course is inputted. That is, it is evaluated whether the give-way course is appropriate as a route for acting as a give-way ship. The regulations for preventing collisions stipulate that a give-way ship "shall, as far as possible, take early and substantial action". Thus, the collision prevention route evaluating unit 46 determines whether the give-way course satisfies this stipulation.

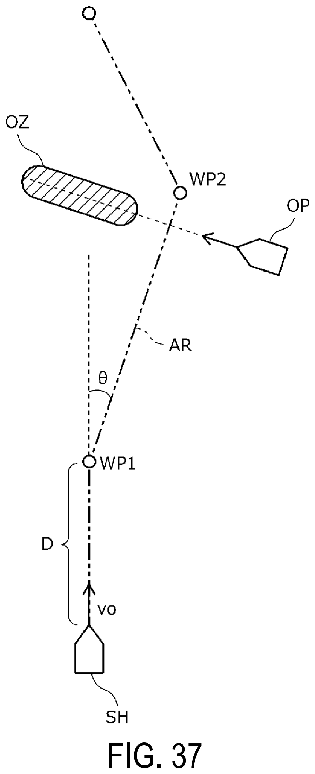

Specifically, the collision prevention route evaluating unit 46 determines whether the time until start of avoidance in the give-way course is equal to or less than a threshold. That is, it is determined whether avoidance is started "as early as possible". As shown in FIG. 37, in a give-way course AR, when the distance from the current position of the own ship SH to a waypoint WP1 of start of avoidance is taken as D, and the ship speed of the own ship SH is taken as vo, it is determined whether a time D/vo until start of avoidance is equal to or less than the threshold.

In addition, the collision prevention route evaluating unit 46 determines whether the steering angle during avoidance in the give-way course is equal to or greater than a threshold. That is, it is determined whether a "substantial action" is being taken. As shown in FIG. 37, it is determined whether the steering angle θ during avoidance, represented by an angle difference between a line segment from the current position of the own ship SH to the waypoint WP1 of start of avoidance and a line segment from the waypoint WP1 of start of avoidance to a next waypoint WP2, is equal to or greater than the threshold.

Furthermore, the collision prevention route evaluating unit 46 determines whether the own ship and the other ship are in a particular positional relationship at a point on the give-way course. Specifically, the collision prevention route evaluating unit 46 evaluates the relative positional relationship between the own ship and the other ship at the closest point of approach, or in the vicinity thereof, at which the own ship and the other ship on the give-way course approach each other most closely.

The closest point of approach is obtained by calculating the TCPA for each leg included in the give-way course. For example, the closest point of approach is obtained as the TCPA when a condition of "TCPA < leg end time point" is satisfied.

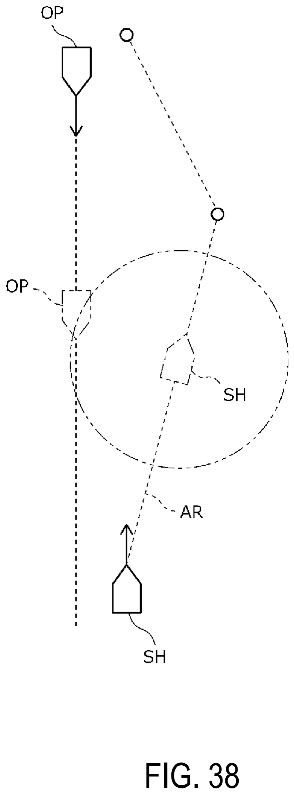

For example, as shown in FIG. 38, in the case where the encountering relationship is a head-on relationship, the collision prevention route evaluating unit 46 determines whether the own ship SH and the other ship OP are in a port-to-port relationship at the closest point of approach on the give-way course AR. That is, it is determined whether each passes on the port side of the other.

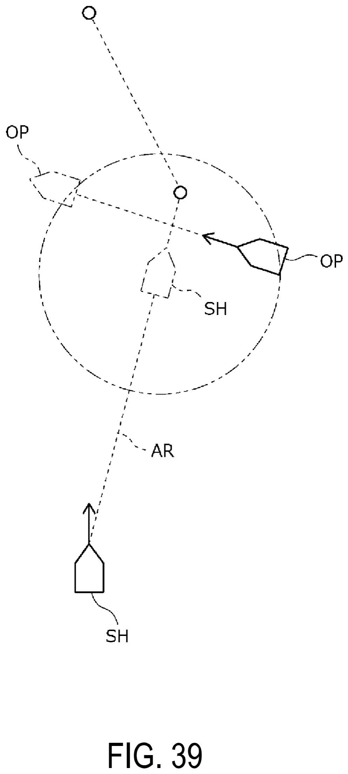

In addition, as shown in FIG. 39, in the case where the encountering relationship is a crossing relationship, the collision prevention route evaluating unit 46 determines whether the own ship SH passes through the stern direction of the other ship OP at the closest point of approach on the give-way course AR. For example, it is determined whether the BCT as viewed from the own ship SH is negative at the closest point of approach.

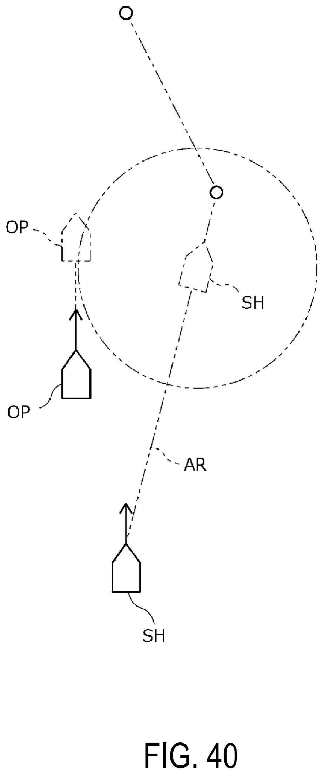

In addition, as shown in FIG. 40, there may be cases where the encountering relationship is an overtaking relationship in which the own ship SH overtakes the other ship OP. In that case, the collision prevention route evaluating unit 46 determines whether the distance between the own ship SH and the other ship OP is equal to or greater than a particular value at the closest point of approach on the give-way course AR.

In addition, in the case where the own ship is determined to be a stand-on ship and a stand-on course is inputted, the collision prevention route evaluating unit 46 evaluates whether the stand-on course is appropriate. That is, it is evaluated whether the stand-on course is appropriate as a route for acting as a stand-on ship. The regulations for preventing collisions stipulate that a stand-on ship "shall keep her course and speed". Thus, the collision prevention route evaluating unit 46 determines whether the ship course and the speed are constant throughout the entire stand-on course.

The collision prevention route evaluating unit 46 may display on the display unit 2 that the scheduled route does not comply with the regulations for preventing collisions in the case where the scheduled route does not comply with the regulations for preventing collisions. In addition, the collision prevention route evaluating unit 46 may display the scheduled route on the display unit 2, and display on the display unit 2 the position or the timing in the scheduled route that does not comply with the regulations for preventing collisions and the reason therefor.

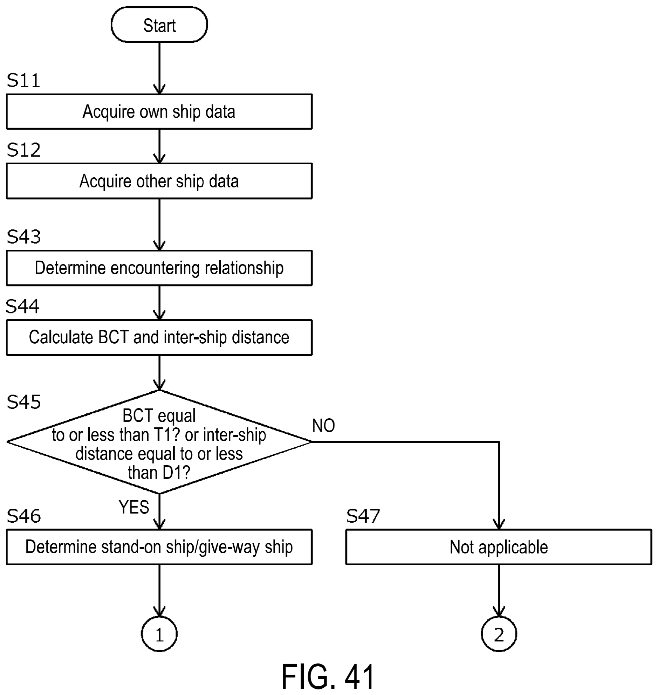

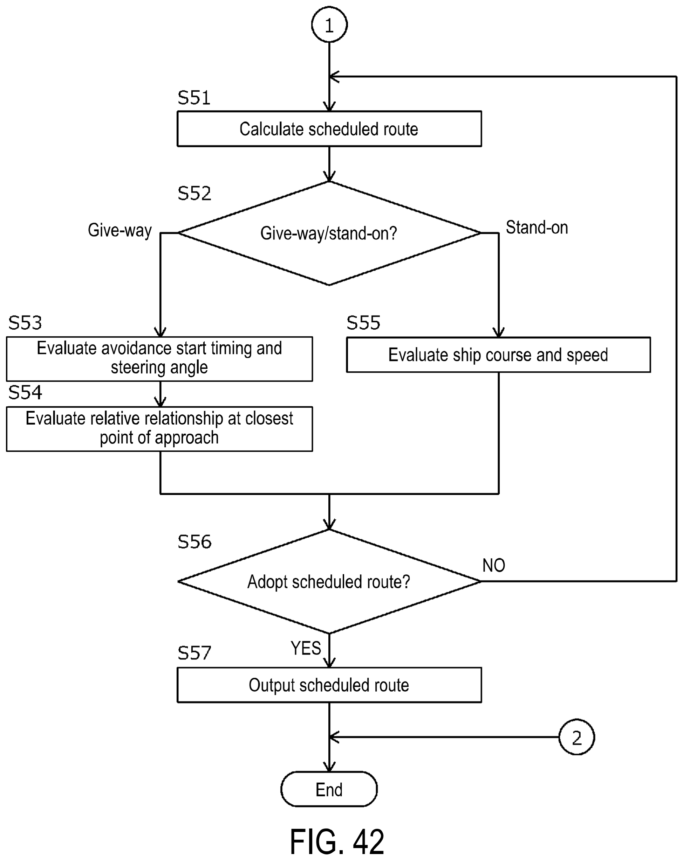

FIG. 41 and FIG. 42 are views showing a procedure example of the navigation assistance method according to the fourth embodiment, which is realized in the navigation assistance device 1. The control unit 20 of the navigation assistance device 1 executes the information processing shown in the figures according to a program.

First, the control unit 20 acquires own ship data representing the position and the speed of the own ship from the GNSS receiver 6 (S11, processing as the own ship data acquiring unit 11).

Next, the control unit 20 acquires other ship data representing the position and the speed of an other ship from the radar 3, the AIS 4, or the camera 5 (S12, processing as the other ship data acquiring unit 12).

Next, the control unit 20 determines an encountering relationship between the own ship and the other ship based on the own ship data and the other ship data (S43, processing as the encountering relationship determining unit 43). The encountering relationship between the own ship and the other ship is classified into a head-on relationship, a crossing relationship, or an overtaking relationship.

Next, the control unit 20 calculates a time (BCT) until the other ship crosses the bow line of the own ship and an inter-ship distance between the own ship and the other ship based on the own ship data and the other ship data (S44), and performs stand-on and give-way determination (S45 to S47, processing as the stand-on and give-way determining unit 44).

Specifically, the control unit 20 determines whether the BCT is equal to or less than a reference time T1 or whether the inter-ship distance is equal to or less than a reference distance D1 (S45).

In the case where the BCT exceeds the reference time T1 and the inter-ship distance exceeds the reference distance D1 (S45: NO), the control unit 20 determines that the own ship and the other ship correspond to neither a stand-on ship nor a give-way ship (S47), and ends the processing.

In contrast, in the case where the BCT is equal to or less than the reference time T1 or the inter-ship distance is equal to or less than the reference distance D1 (S45: YES), the control unit 20 determines to which of a stand-on ship and a give-way ship each of the own ship and the other ship corresponds (S46).

As described above, in a head-on relationship, both the own ship and the other ship are determined to be "give-way ships". In a crossing relationship with a positive course difference, the own ship is determined to be a "stand-on ship" and the other ship is determined to be a "give-way ship". In a crossing relationship with a negative course difference, the own ship is determined to be a "give-way ship" and the other ship is determined to be a "stand-on ship". In an overtaking relationship, the own ship is determined to be a "stand-on ship" and the other ship is determined to be a "give-way ship".

In a crossing relationship with a positive course difference, in the case where the BCT is equal to or less than a reference time T2 that is smaller than the reference time T1, or the inter-ship distance is equal to or less than a reference distance D2 that is smaller than the reference distance D1, the own ship is determined to be a "give-way ship" (see FIG. 33 and FIG. 35).

As shown in FIG. 42, next, the control unit 20 calculates a scheduled route (S51, processing as the route generating unit 14). Specifically, in the case where the own ship is a "give-way ship", the control unit 20 calculates a give-way course for acting as a give-way ship (processing as the give-way course generating unit 451), and in the case where the own ship is a "stand-on ship", the control unit 20 calculates a stand-on course for acting as a stand-on ship (processing as the stand-on route generating unit 452).

Next, in the case where the own ship is a "give-way ship" (S52: give-way), the control unit 20 evaluates whether a time until start of avoidance in the give-way course is equal to or less than a threshold, and whether the steering angle during avoidance is equal to or greater than a threshold (S53, processing as the collision prevention route evaluating unit 46). Furthermore, the control unit 20 evaluates a relative relationship between the own ship and the other ship at a closest point of approach on the give-way course (S54, processing as the collision prevention route evaluating unit 46).

On the other hand, in the case where the own ship is a "stand-on ship" (S52: stand-on), the control unit 20 determines whether the ship course and the speed are constant throughout the entire stand-on course (S55, processing as the collision prevention route evaluating unit 46).

Afterward, the control unit 20 determines whether to adopt the scheduled route according to the evaluation result of the scheduled route (S56). For example, it may be determined to adopt the scheduled route in the case where conditions are all satisfied, such as the time until start of avoidance being equal to or less than the threshold and the steering angle during avoidance being equal to or greater than the threshold, or these conditions may be scored and it may be determined to adopt the scheduled route in the case where a sum of scores is equal to or greater than a threshold.

In the case of determining to adopt the scheduled route (S56: YES), the control unit 20 outputs the scheduled route to the ship operation control unit 10 (S57). The scheduled route outputted to the ship operation control unit 10 is used for ship operation control. In contrast, in the case of determining not to adopt the scheduled route (S56: NO), the control unit 20 executes the series of processing S51 to S56 again for calculating and evaluating the scheduled route.

### [Fifth embodiment]

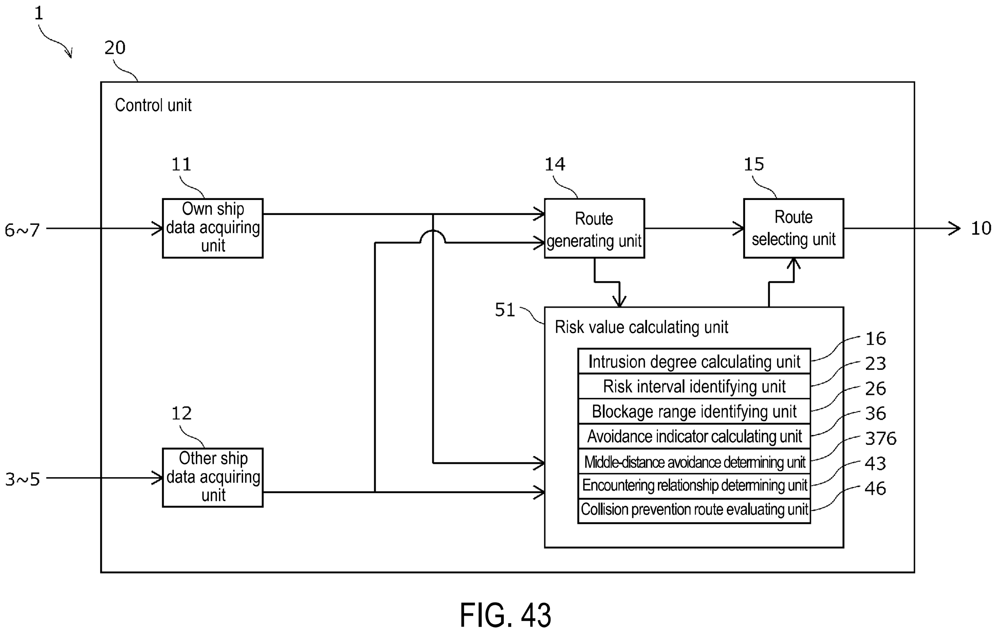

FIG. 43 is a block diagram showing a configuration example of the navigation assistance device 1 according to a fifth embodiment. In the fifth embodiment, the control unit 20 includes an own ship data acquiring unit 11, an other ship data acquiring unit 12, a route generating unit 14, a route selecting unit 15, and a risk value calculating unit 51.

The risk value calculating unit 51 calculates multiple types of risk values that represent, with indicators different from each other, a risk of the own ship and an other ship approaching each other in the case where the own ship navigates each of multiple candidate routes generated by the route generating unit 14, based on the own ship data acquired by the own ship data acquiring unit 11 and the other ship data acquired by the other ship data acquiring unit 12.

The risk value calculating unit 51 includes an intrusion degree calculating unit 16, a risk interval identifying unit 23, a blockage range identifying unit 26, an avoidance indicator calculating unit 36, a middle-distance avoidance determining unit 376, an encountering relationship determining unit 43, and a collision prevention route evaluating unit 46.

The intrusion degree calculating unit 16 calculates an intrusion degree in the case where the own ship navigates the candidate route as one of the multiple types of risk values (see FIG. 4 to FIG. 9). That is, the intrusion degree calculating unit 16 has a risk coefficient that is defined according to the bearing based on the own ship SH, and calculates the intrusion degree when an other ship OP is predicted to intrude into a bumper region BM in which a risk coefficient RC becomes higher as it is closer to an own ship SH in each bearing based on the own ship SH.

The risk interval identifying unit 23 calculates presence or absence of a collision risk region such as an OZT on the candidate route as one of the multiple types of risk values (see FIG. 13). That is, the risk interval identifying unit 23 identifies risk intervals L1 and L2 in a predicted route R of the other ship OP where there is a risk of collision between the own ship SH and the other ship OP when assuming that the own ship SH changes course to navigate in any direction and crosses the predicted route R of the other ship OP.

The risk interval identifying unit 23 may also calculate presence or absence of a collision risk region on the candidate route as a risk value to be used when there is a collision risk region at a short distance (i.e., when the distance or the time until reaching is smaller than a particular value).

The blockage range identifying unit 26 calculates a blockage range or a blockage degree in the case where the own ship navigates the candidate route as one of the multiple types of risk values (see FIG. 14 to FIG. 16). That is, the blockage range identifying unit 26 identifies blockage ranges C1 and C2 representing angle ranges in which the own ship SH crosses the risk intervals L1 and L2 identified by the risk interval identifying unit 23 in the case where the own ship SH changes course to navigate in any direction, and calculates a ratio of the blockage ranges C1 and C2 to an angle range SA as the blockage degree.

The avoidance indicator calculating unit 36 calculates an avoidance indicator in the case where the own ship navigates the candidate route as a risk value to be used when there is a risk related to the avoidance indicator at a middle distance (i.e., when the distance or the time until reaching is larger than a particular value). The middle-distance avoidance determining unit 376 may determine whether the avoidance indicator, which is weighted to gradually increase as the margin to risk becomes larger, is equal to or greater than a threshold, or may gradually decrease the threshold applied to the avoidance indicator as the margin to risk becomes larger (see FIG. 22 and FIG. 23).

The collision prevention route evaluating unit 46 calculates an evaluation value of the candidate route corresponding to the encountering relationship determined by the encountering relationship determining unit 43 as one of the multiple types of risk values. The collision prevention route evaluating unit 46 evaluates whether the candidate route complies with the regulations for preventing collisions, i.e., whether the give-way course is appropriate in the case where the own ship is a give-way ship or whether the stand-on course is appropriate in the case where the own ship is a stand-on ship (see FIG. 37 to FIG. 40).

The route selecting unit 15 selects some scheduled routes from among the multiple scheduled routes based on the multiple types of risk values calculated for each of the multiple candidate routes. Specifically, the route selecting unit 15 selects a candidate route with a minimum sum of the multiple types of risk values from among the multiple candidate routes, and outputs to the ship operation control unit 10. The ship operation control unit 10 performs ship operation control of the own ship based on the selected scheduled route.

In addition, the route selecting unit 15 may also increase the weight of a particular risk value (multiplying by a coefficient of 1 or more) among the multiple types of risk values to calculate a weighted sum, and select a candidate route with a minimum weighted sum. The weight of the risk value may be adjustable by the user. Accordingly, evaluation that matches the user's risk perception becomes possible.

Not limited thereto, the route selecting unit 15 may also extract all scheduled routes of which the sum of the multiple types of risk values is equal to or less than a particular value, and may display the extracted multiple scheduled routes on the display unit 2 to prompt the user to select a scheduled route. In addition, the multiple scheduled routes calculated by the route generating unit 14 or extracted by the route selecting unit 15 may be displayed on the display unit 2 in display modes corresponding to the multiple types of risk values (see FIG. 10 above).

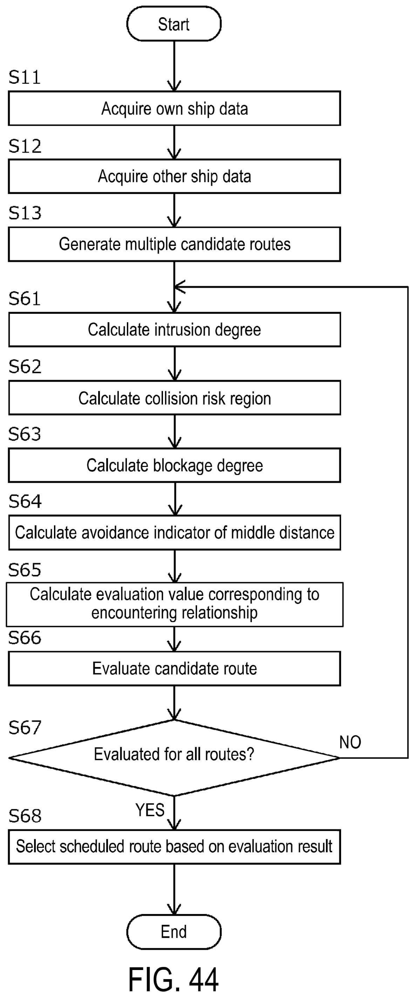

FIG. 44 is a view showing a procedure example of the navigation assistance method according to the fifth embodiment, which is realized in the navigation assistance device 1. The control unit 20 of the navigation assistance device 1 executes the information processing shown in the figure according to a program.

First, the control unit 20 acquires own ship data representing the position and the speed of the own ship from the GNSS receiver 6 (S11, processing as the own ship data acquiring unit 11).

Next, the control unit 20 acquires other ship data representing the position and the speed of an other ship from the radar 3, the AIS 4, or the camera 5 (S12, processing as the other ship data acquiring unit 12).

Next, the control unit 20 generates multiple candidate routes (S13, processing as the route generating unit 14). The control unit 20 executes processing of S61 to S66 below for each of the multiple candidate routes.

Specifically, the control unit 20 calculates an intrusion degree in the case where the own ship navigates the candidate route (S61, processing as the intrusion degree calculating unit 16).

Next, the control unit 20 calculates presence or absence of a collision risk region on the candidate route (S62, processing as the risk interval identifying unit 23).

Next, the control unit 20 calculates a blockage range and a blockage degree in the case where the own ship navigates the candidate route (S63, processing as the blockage range identifying unit 26).

Next, the control unit 20 calculates an avoidance indicator in the case where the own ship navigates the candidate route (S64, processing as the avoidance indicator calculating unit 36).

Next, the control unit 20 calculates an evaluation value of the candidate route corresponding to the encountering relationship (S65, processing as the collision prevention route evaluating unit 46).

Next, the control unit 20 evaluates the candidate route based on the calculation result according to the processing of S61 to S65 above (S66). The control unit 20 executes the processing of S61 to S66 above for all the candidate routes (S67).

Next, the control unit 20 selects a candidate route to be used for ship operation control from among the multiple candidate routes based on the evaluation result (S68, processing as the route selecting unit 15). The selected candidate route is outputted to the ship operation control unit 10.

### [Sixth embodiment]

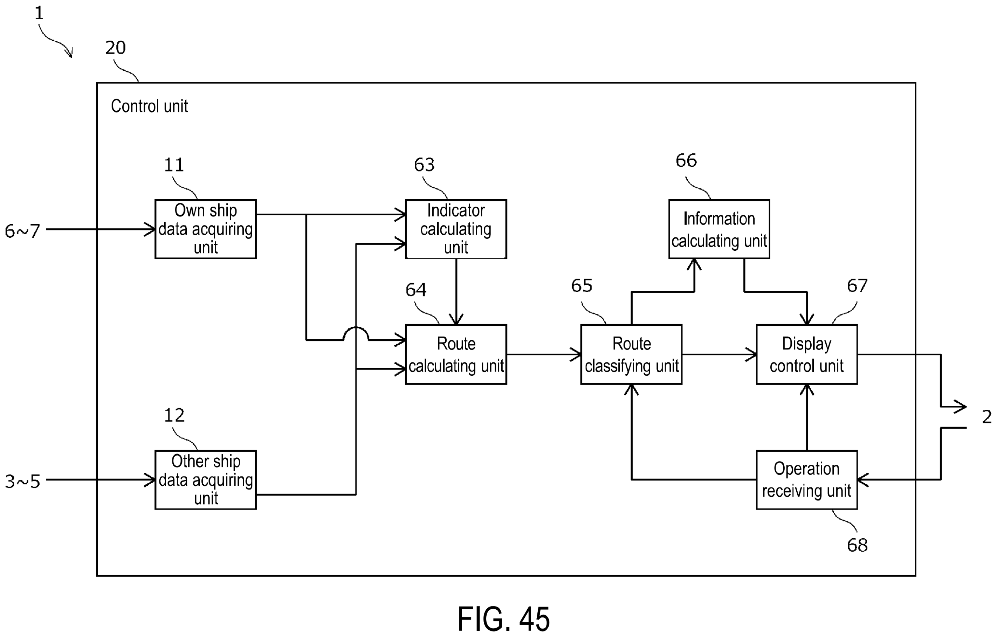

FIG. 45 is a block diagram showing a configuration example of the navigation assistance device 1 according to a sixth embodiment. In the sixth embodiment, the control unit 20 includes an own ship data acquiring unit 11, an other ship data acquiring unit 12, an indicator calculating unit 63, a route calculating unit 64, a route classifying unit 65, an information calculating unit 66, a display control unit 67, and an operation receiving unit 68.

The indicator calculating unit 63 calculates a risk indicator representing a risk for the own ship to collide with an obstacle such as an other ship based on the own ship data acquired by the own ship data acquiring unit 11 and the other ship data acquired by the other ship data acquiring unit 12 (in a manner similar to the collision risk calculating unit 13 above). For example, the indicator calculating unit 63 calculates a collision risk region such as an OZT or a TCPA of a CPA collision alarm as the risk indicator.

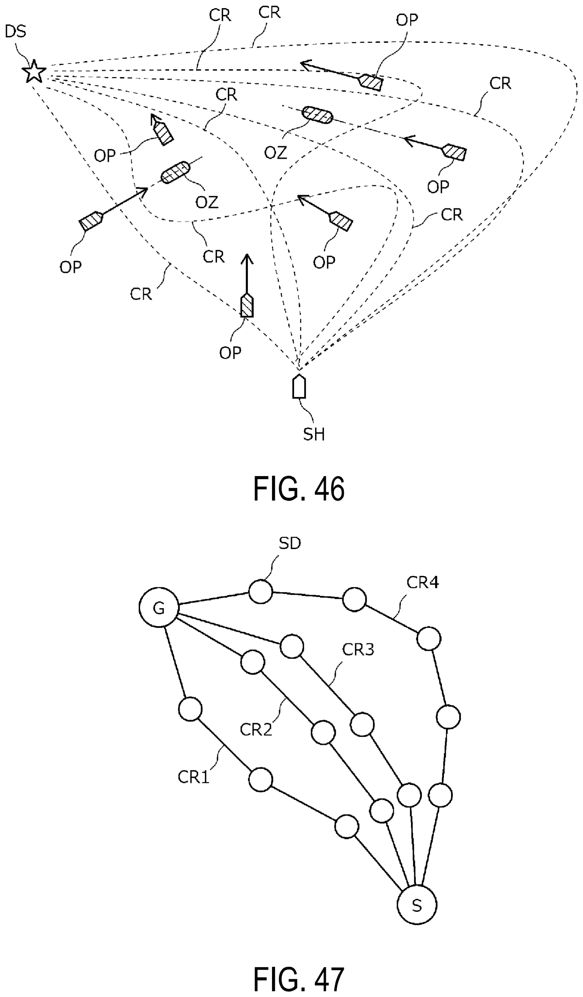

The route calculating unit 64 calculates multiple candidate routes for the own ship (in a manner similar to the route generating unit 14 above). For example, the route calculating unit 64 calculates, as the multiple candidate routes, multiple give-way courses for avoiding collision with an obstacle such as the other ship based on the risk indicator calculated by the indicator calculating unit 63. As shown in FIG. 46, the route calculating unit 64 calculates multiple candidate routes CR from the own ship SH toward a target point DS to avoid collision with the other ship OP.

Not limited thereto, the route calculating unit 64 may also acquire multiple candidate routes from other devices such as the ECDIS 8.

In the case of using such a route generating function, since many candidate routes are generated, if the candidate routes are all prompted to the user, it may be difficult for the user to understand. Particularly, in the case of avoiding collision with other ships in congested waters, since a very large number of give-way courses are calculated, such an issue becomes prominent.

Thus, in this embodiment, as described below, by grouping the multiple candidate routes and narrowing down respective representative routes, it becomes possible to prompt candidate routes to the user in an easily understandable manner.

The route classifying unit 65 groups the multiple candidate routes generated by the route calculating unit 64 into multiple groups based on similarity, and determines a representative route for each of the groups. In other words, the route classifying unit 65 integrates multiple candidate routes for each group and selects a representative route representing each group. The number of groups is smaller than the number of candidate routes.

Specifically, the route classifying unit 65 classifies the multiple candidate routes into multiple groups by clustering. For clustering, a conventional method such as K-means, DBSCAN, mean-shift, etc. may be used. The number of groups classified by clustering may be a particular number specified in advance by the user.

As shown in FIG. 47, each of multiple candidate routes CR1 to CR4 is composed of points (nodes) SD arranged sequentially from start S to goal G. The similarity of the candidate routes CR1 to CR4 is evaluated based on, for example, the positional relationship of the points SD at each time point.

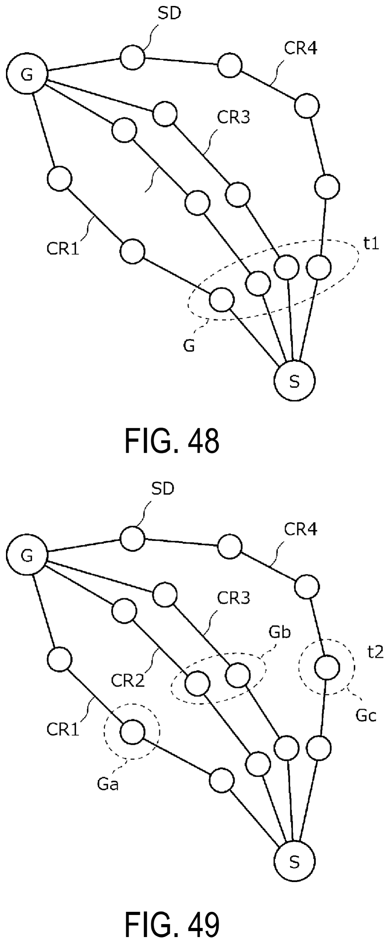

As shown in FIG. 48, at a time point t1 immediately after start, the four candidate routes CR1 to CR4 are evaluated as a same group G. However, as shown in FIG. 49, at a subsequent time point t2, the candidate route CR1 is taken as a group Ga; the candidate routes CR2 and CR3, in which the positions of the points SD are relatively close, are taken as a group Gb; and the candidate route CR4 is taken as a group Gc.

At subsequent time points, grouping is performed within each group, and upon generation of new groups, grouping is further performed within each group including the new groups. Such grouping is sequentially performed at each time point from start S to goal G.

Not limited to clustering, the route classifying unit 65 may also group the multiple candidate routes according to other methods. Although an example of clustering based on two-dimensional spatial positions (including course change angles) of routes has been described above, not limited thereto, clustering characterized by route evaluation values such as the distance to the goal, fuel consumption, encountered risks, etc. may also be applied.

Specifically, the route classifying unit 65 may classify the multiple candidate routes into multiple groups based on the positions of point groups constituting each of the multiple candidate routes. For example, in the case where the distance between points SD at each time point of multiple candidate routes is equal to or less than a particular value, or in the case where the density of points SD at each time point is equal to or greater than a particular value, these candidate routes are taken as a same group.

In addition, the route classifying unit 65 may classify the multiple candidate routes into multiple groups based on the course change angle of each of the multiple candidate routes. For example, in the case where a course change angle range is equal to or less than a particular value in multiple candidate courses, these candidate routes are taken as a same group. The course change angle to be compared may be the course change angle at the point SD at each time point, or may be the course change angle of the entire candidate course.

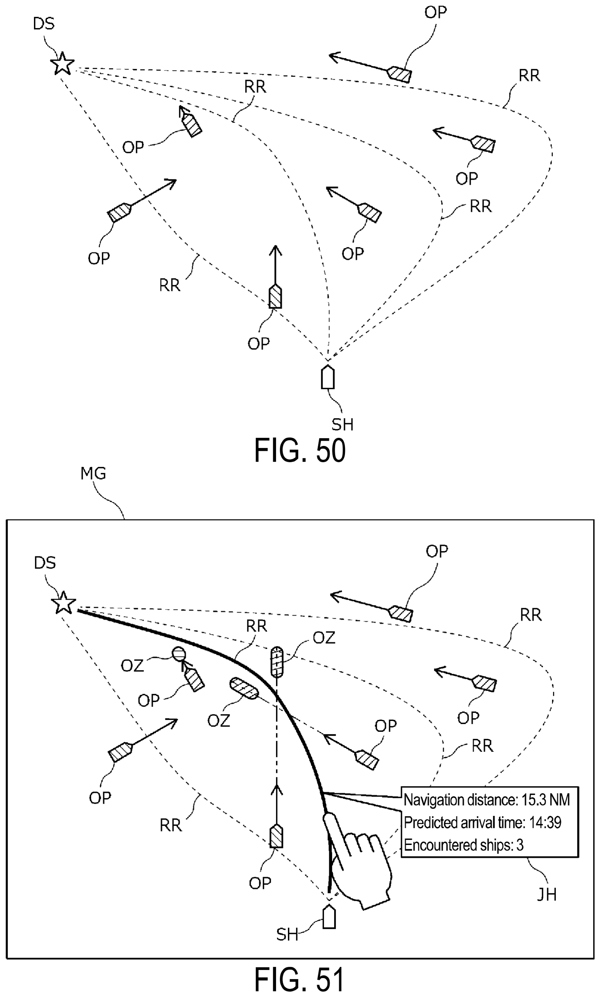

The route classifying unit 65 determines a representative route for each of the groups from among the candidate routes grouped into the multiple groups. Accordingly, as shown in FIG. 50, the candidate routes are narrowed down to a smaller number of representative routes RR than the candidate routes CR.

Specifically, the route classifying unit 65 determines the representative route based on the length of the candidate route. For example, among the candidate routes included in the same group, the shortest candidate route is determined as the representative route.

In addition, the route classifying unit 65 may also determine the representative route based on the number of course change points of the candidate route. For example, among the candidate routes included in the same group, the candidate route with the fewest course change points is determined as the representative route.

In addition, the route classifying unit 65 may also determine the representative route based on the risk indicator in the case of navigating the candidate route. For example, among the candidate routes included in the same group, the candidate route with the fewest encounters with collision risk regions is determined as the representative route.

The information calculating unit 66 calculates route information for each of the representative routes selected by the route classifying unit 65. The route information represents a state predicted to occur in the case where the own ship navigates the representative route. The route information is useful information for selecting the route, such as a navigation distance of the representative route, fuel consumption, other ships to be encountered, or a congestion level.

The display control unit 67 displays each of the representative routes selected by the route classifying unit 65 on the display unit 2. In addition, the display control unit 67 displays the route information calculated by the information calculating unit 66 together with the representative routes on the display unit 2.

The operation receiving unit 68 receives an operation input performed by the user from the touch panel of the display unit 2. Specifically, the operation receiving unit 68 receives selection of the representative route displayed on the display unit 2. In addition, the operation receiving unit 68 receives adjustment of similarity for grouping.

As shown in FIG. 51, in an image MG displayed on the display unit 2, multiple representative routes RR from the current position of the own ship SH to the destination DS are displayed. Upon selection of a representative route RR by the user, the selected representative route RR is discriminatingly displayed. The image MG also displays collision risk regions OZ predicted to occur in the case of navigating the selected representative route RR.

In addition, in the image MG, a balloon JH showing the route information of the selected representative route RR is also displayed. In the balloon JH, the route information is displayed, such as the navigation distance in the case of navigating the selected representative route RR, the predicted arrival time to the destination DS, and the number of encountered ships.

The discriminating display of the representative route RR is, for example, a so-called highlight display that configures a display mode such as the thickness, the brightness, or the color of the selected representative route RR to be different from other representative routes RR. In addition, the selected representative route RR may also be left unchanged, and the other representative routes RR may be displayed transparently.

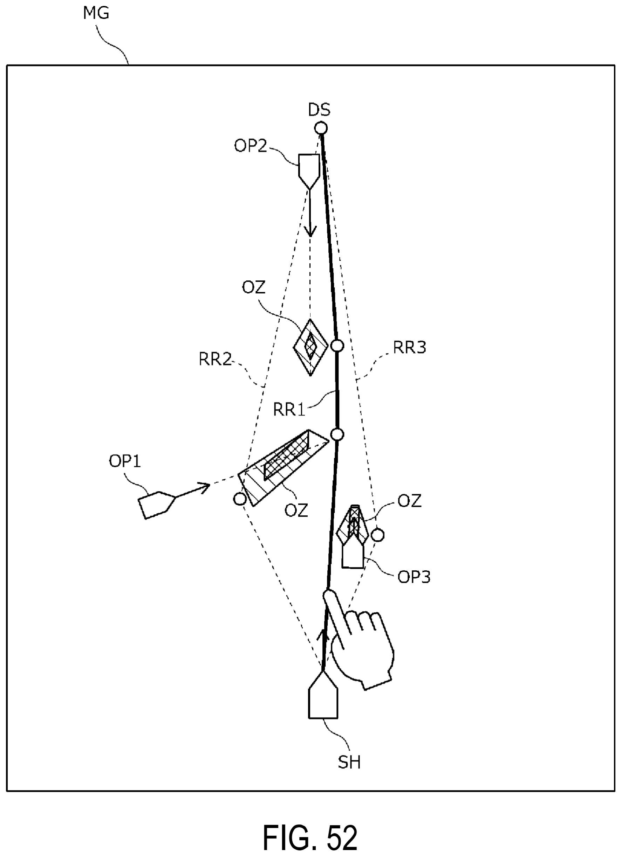

FIG. 52 to FIG. 54 are views for describing the discriminating display of the representative route RR in more detail. For example, as shown in FIG. 52, upon selection of a central representative route RR1, the selected representative route RR1 is discriminatingly displayed, and other ships OP1 to OP3, which approach in the case where the representative route RR1 is navigated, and collision risk regions OZ related thereto are discriminatingly displayed.

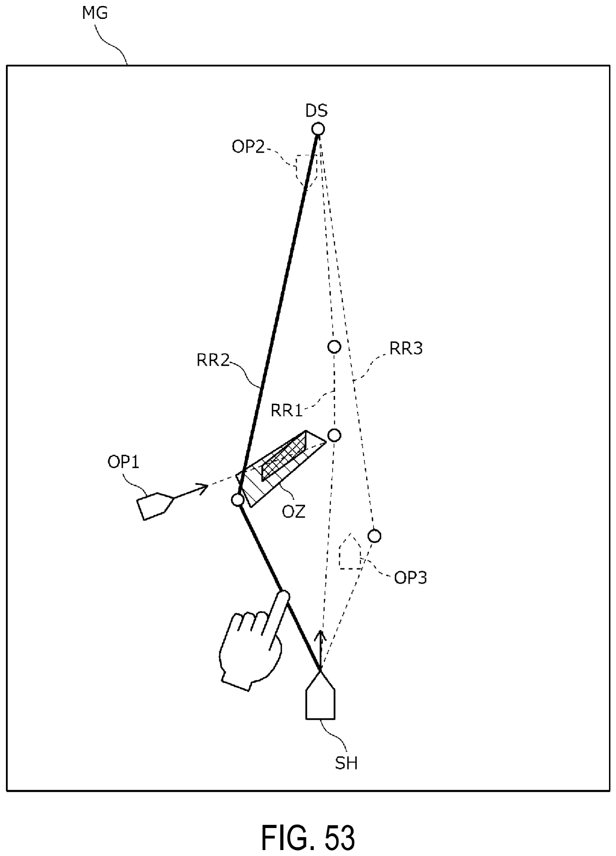

As shown in FIG. 53, upon selection of a left representative route RR2, the selected representative route RR2 is discriminatingly displayed, and the other ship OP1, which approaches in the case where the representative route RR2 is navigated, and the collision risk region OZ related thereto are also discriminatingly displayed. The other ships OP2 and OP3, which do not approach in the case where the representative route RR2 is navigated, are displayed transparently.

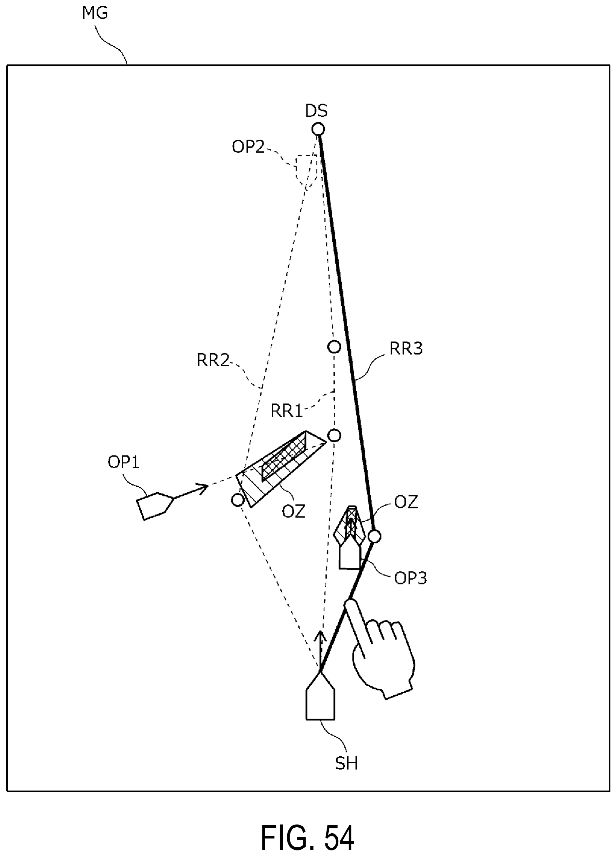

As shown in FIG. 54, upon selection of a right representative route RR3, the selected representative route RR3 is discriminatingly displayed, and the other ships OP1 and OP3, which approach in the case where the representative route RR3 is navigated, and the collision risk regions OZ related thereto are also discriminatingly displayed. The other ship OP2, which does not approach in the case where the representative route RR3 is navigated, is displayed transparently.

In addition, with the operation receiving unit 68 receiving adjustment of similarity for grouping from the user, the route classifying unit 65 executes the grouping of candidate routes and the determination of the representative route of each group again using the adjusted similarity, and the display control unit 67 updates the display of the representative routes. Accordingly, it becomes possible for the user to adjust the similarity and change the number of representative routes while viewing the image MG displayed on the display unit 2.

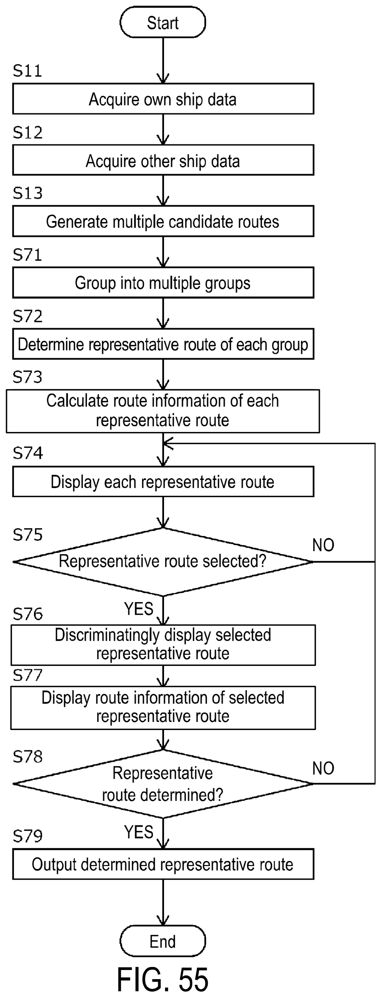

FIG. 55 is a view showing a procedure example of the navigation assistance method according to the sixth embodiment, which is realized in the navigation assistance device 1. The control unit 20 of the navigation assistance device 1 executes the information processing shown in the figure according to a program.

First, the control unit 20 acquires own ship data representing the position and the speed of the own ship from the GNSS receiver 6 (S11, processing as the own ship data acquiring unit 11).

Next, the control unit 20 acquires other ship data representing the position and the speed of an other ship from the radar 3, the AIS 4, or the camera 5 (S12, processing as the other ship data acquiring unit 12).

Next, the control unit 20 generates multiple candidate routes (S13, processing as the route calculating unit 64).

Next, the control unit 20 groups the multiple candidate routes into multiple groups based on similarity, and determines a representative route for each of the groups (S71, S72, processing as the route classifying unit 65).

Next, the control unit 20 calculates route information of each of the representative routes (S73, processing as the information calculating unit 66).

Next, the control unit 20 displays each of the representative routes on the display unit 2 (S74, processing as the display control unit 67, see FIG. 51 to FIG. 54).

Upon selection of a representative route displayed on the display unit 2 (S75: YES), the control unit 20 discriminatingly displays the selected representative route and displays the route information of the selected representative route (S76, S77, processing as the display control unit 67, see FIG. 51 to FIG. 54).

Upon determination of the representative route (S78: YES), the control unit 20 outputs the determined representative route to the ship operation control unit 10 (S79). The representative route outputted to the ship operation control unit 10 is used for ship operation control.

Although the embodiments of the disclosure have been described above, the disclosure is not limited to the embodiments described above, and obviously various modifications are possible for those skilled in the art.

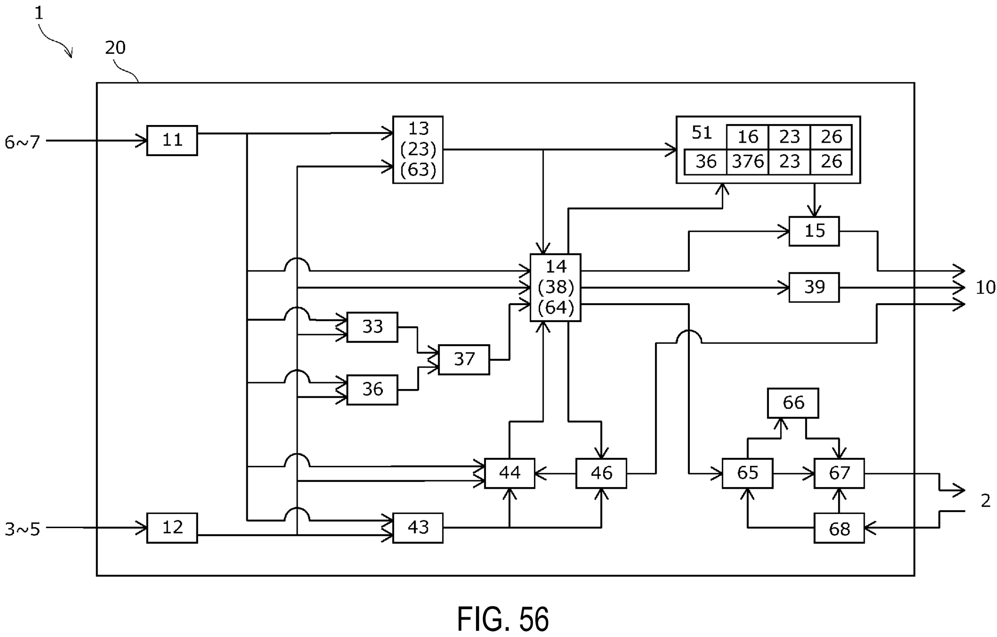

FIG. 56 is a block diagram showing a configuration example of the navigation assistance device 1 according to a comprehensive embodiment that encompasses the first to sixth embodiments described above. By appropriately extracting some functional units from the functional units shown in the figure, as in the first to sixth embodiments or not limited thereto, it is possible to realize various effects.

Representative embodiments of the disclosure are listed below.
(1) A navigation assistance device including:
   a candidate route calculating unit configured to calculate a plurality of candidate routes for a ship;
   a route classifying unit configured to classify the plurality of candidate routes into a plurality of groups based on similarity and determine a representative route for each of the plurality of groups; and
   a display unit configured to display the representative route of each of the plurality of groups.
(2) The navigation assistance device according to (1), further including a detecting unit configured to detect an obstacle, in which
   the candidate route calculating unit is configured to calculate a plurality of give-way courses for avoiding collision with the obstacle as the plurality of candidate routes.
(3) The navigation assistance device according to (2), in which
   the detecting unit is configured to detect the obstacle based on data generated by a radar, an AIS, or a camera.
(4) The navigation assistance device according to any one of (1) to (3), in which
   the route classifying unit is configured to classify the plurality of candidate routes into the plurality of groups by clustering.
(5) The navigation assistance device according to any one of (1) to (3), in which
   the route classifying unit is configured to classify the plurality of candidate routes into the plurality of groups based on positions of point groups constituting each of the plurality of candidate routes.
(6) The navigation assistance device according to any one of (1) to (3), in which
   the route classifying unit is configured to classify the plurality of candidate routes into the plurality of groups based on a course change angle of each of the plurality of candidate routes.
(7) The navigation assistance device according to any one of (1) to (6), in which
   the route classifying unit is configured to determine the representative route based on a length of the candidate route.
(8) The navigation assistance device according to any one of (1) to (6), in which
   the route classifying unit is configured to determine the representative route based on the number of course change points of the candidate route.
(9) The navigation assistance device according to (2) or (3), further including an indicator calculating unit configured to calculate a risk indicator representing a risk of colliding with the obstacle, in which
   the route classifying unit is configured to determine the representative route based on the risk indicator in a case of navigating the candidate route.
(10) The navigation assistance device according to any one of (1) to (9), further including an information calculating unit configured to calculate route information of the representative route, in which
   the display unit is configured to display the route information together with the representative route.
(11) The navigation assistance device according to (9), in which
   the display unit is configured to discriminatingly display a symbol of the obstacle that approaches in a case where the representative route is navigated based on the risk indicator.
(12) The navigation assistance device according to any one of (1) to (11), further including a receiving unit configured to receive adjustment of the similarity for classifying the plurality of candidate routes into the plurality of groups.
(13) A navigation assistance method including:
   calculating a plurality of candidate routes for a ship;
   grouping the plurality of candidate routes into a plurality of groups based on similarity;
   selecting a representative route for each of the plurality of groups; and
   displaying the representative route of each of the plurality of groups.
(14) A program for causing a computer to execute processing configured to:
   calculate a plurality of candidate routes for a ship;
   group the plurality of candidate routes into a plurality of groups based on similarity;
   determine a representative route for each of the plurality of groups; and
   display the representative route of each of the plurality of groups.

### Terminology

It is to be understood that not necessarily all objects or advantages may be achieved in accordance with any particular embodiment described herein. Thus, for example, those skilled in the art will recognize that certain embodiments may be configured to operate in a manner that achieves or optimizes one advantage or group of advantages as taught herein without necessarily achieving other objects or advantages as may be taught or suggested herein.

All of the processes described herein may be embodied in, and fully automated via, software code modules executed by a computing system that includes one or more computers or processors. The code modules may be stored in any type of non-transitory computer-readable medium or other computer storage device. Some or all the methods may be embodied in specialized computer hardware.

Many other variations than those described herein will be apparent from this disclosure. For example, depending on the embodiment, certain acts, events, or functions of any of the algorithms described herein can be performed in a different sequence, can be added, merged, or left out altogether (e.g., not all described acts or events are necessary for the practice of the algorithms). Moreover, in certain embodiments, acts or events can be performed concurrently, e.g., through multi-threaded processing, interrupt processing, or multiple processors or processor cores or on other parallel architectures, rather than sequentially. In addition, different tasks or processes can be performed by different machines and/or computing systems that can function together.

The various illustrative logical blocks and modules described in connection with the embodiments disclosed herein can be implemented or performed by a machine, such as a processor. A processor can be a microprocessor, but in the alternative, the processor can be a controller, microcontroller, or state machine, combinations of the same, or the like. A processor can include electrical circuitry configured to process computer-executable instructions. In another embodiment, a processor includes an application specific integrated circuit (ASIC), a field programmable gate array (FPGA) or other programmable device that performs logic operations without processing computer-executable instructions. A processor can also be implemented as a combination of computing devices, e.g., a combination of a digital signal processor (DSP) and a microprocessor, a plurality of microprocessors, one or more microprocessors in conjunction with a DSP core, or any other such configuration. Although described herein primarily with respect to digital technology, a processor may also include primarily analog components. For example, some or all of the signal processing algorithms described herein may be implemented in analog circuitry or mixed analog and digital circuitry. A computing environment can include any type of computer system, including, but not limited to, a computer system based on a microprocessor, a mainframe computer, a digital signal processor, a portable computing device, a device controller, or a computational engine within an appliance, to name a few.

Conditional language such as, among others, "can," "could," "might" or "may," unless specifically stated otherwise, are otherwise understood within the context as used in general to convey that certain embodiments include, while other embodiments do not include, certain features, elements and/or steps. Thus, such conditional language is not generally intended to imply that features, elements and/or steps are in any way required for one or more embodiments or that one or more embodiments necessarily include logic for deciding, with or without user input or prompting, whether these features, elements and/or steps are included or are to be performed in any particular embodiment.

Disjunctive language such as the phrase "at least one of X, Y, or Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

Any process descriptions, elements or blocks in the flow diagrams described herein and/or depicted in the attached figures should be understood as potentially representing modules, segments, or portions of code which include one or more executable instructions for implementing specific logical functions or elements in the process. Alternate implementations are included within the scope of the embodiments described herein in which elements or functions may be deleted, executed out of order from that shown, or discussed, including substantially concurrently or in reverse order, depending on the functionality involved as would be understood by those skilled in the art.

Unless otherwise explicitly stated, articles such as "a" or "an" should generally be interpreted to include one or more described items. Accordingly, phrases such as "a device configured to" are intended to include one or more recited devices. Such one or more recited devices can also be collectively configured to carry out the stated recitations. For example, "a processor configured to carry out recitations A, B and C" can include a first processor configured to carry out recitation A working in conjunction with a second processor configured to carry out recitations B and C. The same holds true for the use of definite articles used to introduce embodiment recitations. In addition, even if a specific number of an introduced embodiment recitation is explicitly recited, those skilled in the art will recognize that such recitation should typically be interpreted to mean at least the recited number (e.g., the bare recitation of "two recitations," without other modifiers, typically means at least two recitations, or two or more recitations).

It will be understood by those within the art that, in general, terms used herein, are generally intended as "open" terms (e.g., the term "including" should be interpreted as "including but not limited to," the term "having" should be interpreted as "having at least," the term "includes" should be interpreted as "includes but is not limited to," etc.).

For expository purposes, the term "horizontal" as used herein is defined as a plane parallel to the plane or surface of the floor of the area in which the system being described is used or the method being described is performed, regardless of its orientation. The term "floor" can be interchanged with the term "ground" or "water surface". The term "vertical" refers to a direction perpendicular to the horizontal as just defined. Terms such as "above," "below," "bottom," "top," "side," "higher," "lower," "upper," "over," and "under," are defined with respect to the horizontal plane.

As used herein, the terms "attached," "connected," "mated," and other such relational terms should be construed, unless otherwise noted, to include removable, moveable, fixed, adjustable, and/or releasable connections or attachments. The connections/attachments can include direct connections and/or connections having intermediate structure between the two components discussed.

Numbers preceded by a term such as "approximately", "about", and "substantially" as used herein include the recited numbers, and also represent an amount close to the stated amount that still performs a desired function or achieves a desired result. For example, the terms "approximately", "about", and "substantially" may refer to an amount that is within less than 10% of the stated amount. Features of embodiments disclosed herein preceded by a term such as "approximately", "about", and "substantially" as used herein represent the feature with some variability that still performs a desired function or achieves a desired result for that feature.

It should be emphasized that many variations and modifications may be made to the above-described embodiments, the elements of which are to be understood as being among other acceptable examples. All such modifications and variations are intended to be included herein within the scope of this disclosure and protected by the following claims.

### Reference Signs List

1: navigation assistance device, 2: display unit, 3: radar, 4: AIS, 5: camera, 6: GNSS receiver, 7: gyrocompass, 8: ECDIS, 9: wireless communicating unit, 10: ship operation control unit, 20: control unit, 11: own ship data acquiring unit (example of first acquiring unit), 12: other ship data acquiring unit (example of second acquiring unit), 13: collision risk calculating unit, 14: route generating unit, 15: route selecting unit, 16: intrusion degree calculating unit, 23: risk interval identifying unit, 26: blockage range identifying unit, 33: collision indicator calculating unit, 36: avoidance indicator calculating unit, 37: avoidance determining unit, 38: route calculating unit, 39: adoption determining unit, 373: short-distance avoidance determining unit, 376: middle-distance avoidance determining unit, 43: encountering relationship determining unit, 44: stand-on and give-way determining unit, 46: collision prevention route evaluating unit, 51: risk value calculating unit, 63: indicator calculating unit, 64: route calculating unit, 65: route classifying unit, 66: information calculating unit, 67: display control unit, 68: operation receiving unit, 100: onboard system

## Claims

1. A navigation assistance device comprising:
a candidate route calculating unit configured to calculate a plurality of candidate routes for a ship;
a route classifying unit configured to classify the plurality of candidate routes into a plurality of groups based on similarity and determine a representative route for each of the plurality of groups; and
a display unit configured to display the representative route of each of the plurality of groups.

2. The navigation assistance device according to claim 1, further comprising a detecting unit configured to detect an obstacle, wherein
the candidate route calculating unit is configured to calculate a plurality of give-way courses for avoiding collision with the obstacle as the plurality of candidate routes.

3. The navigation assistance device according to claim 2, wherein
the detecting unit is configured to detect the obstacle based on data generated by a radar, an AIS, or a camera.

4. The navigation assistance device according to claim 1, wherein
the route classifying unit is configured to classify the plurality of candidate routes into the plurality of groups by clustering.

5. The navigation assistance device according to claim 1, wherein
the route classifying unit is configured to classify the plurality of candidate routes into the plurality of groups based on positions of point groups constituting each of the plurality of candidate routes.

6. The navigation assistance device according to claim 1, wherein
the route classifying unit is configured to classify the plurality of candidate routes into the plurality of groups based on a course change angle of each of the plurality of candidate routes.

7. The navigation assistance device according to claim 1, wherein
the route classifying unit is configured to determine the representative route based on a length of the candidate route.

8. The navigation assistance device according to claim 1, wherein
the route classifying unit is configured to determine the representative route based on the number of course change points of the candidate route.

9. The navigation assistance device according to claim 2, further comprising an indicator calculating unit configured to calculate a risk indicator representing a risk of colliding with the obstacle, wherein
the route classifying unit is configured to determine the representative route based on the risk indicator in a case of navigating the candidate route.

10. The navigation assistance device according to claim 1, further comprising an information calculating unit configured to calculate route information of the representative route, wherein
the display unit is configured to display the route information together with the representative route.

11. The navigation assistance device according to claim 9, wherein
the display unit is configured to discriminatingly display a symbol of the obstacle that approaches in a case where the representative route is navigated based on the risk indicator.

12. The navigation assistance device according to claim 1, further comprising a receiving unit configured to receive adjustment of the similarity for classifying the plurality of candidate routes into the plurality of groups.

13. A navigation assistance method comprising:
calculating a plurality of candidate routes for a ship;
grouping the plurality of candidate routes into a plurality of groups based on similarity;
selecting a representative route for each of the plurality of groups; and
displaying the representative route of each of the plurality of groups.

14. A program for causing a computer to execute processing configured to:
calculate a plurality of candidate routes for a ship;
group the plurality of candidate routes into a plurality of groups based on similarity;
determine a representative route for each of the plurality of groups; and
display the representative route of each of the plurality of groups.
